# EUROPÄISCHE PATENTSCHRIFT

(11) **EP 3 363 685 B1**
(45) Veröffentlichungstag und Bekanntmachung des Hinweises auf die Patenterteilung: **22.12.2021**
(21) Anmeldenummer: 17157166.4
(22) Anmeldetag: 21.02.2017
(51) Int. Cl.: B60Q 1/44, B60Q 9/00, G08G 1/16

(54) **FAHRZEUGLEUCHTE UND VERFAHREN ZU DEREN BETRIEB**
VEHICLE LIGHT AND METHOD FOR ITS OPERATION
PHARE DE VÉHICULE ET SON PROCÉDÉ DE FONCTIONNEMENT

(43) Veröffentlichungstag der Anmeldung: 22.08.2018
(73) Patentinhaber: odelo GmbH, 70329 Stuttgart (DE)
(72) Erfinder: SCHWEGLER, Veit, 70372 Stuttgart (DE); VOLLMER, Marco, 71332 Waiblingen (DE)
(74) Vertreter: Benninger, Johannes

(56) Entgegenhaltungen:
- WO-A1-2012/110719
- WO-A2-2009/116032
- DE-A1- 10 227 115
- DE-A1- 19 712 457
- DE-A1- 19 845 679
- DE-A1-102004 027 932
- DE-A1-102005 043 058
- ES-A1- 2 353 709
- FR-A1- 2 801 548
- JP-A- H07 156 709
- US-A- 5 736 926
- US-B1- 6 411 204
- US-H- H2 001

## Beschreibung

Die Erfindung betrifft eine Fahrzeugleuchte gemäß dem Oberbegriff des Anspruchs 1 und ein Verfahren zum Betrieb einer solchen Fahrzeugleuchte gemäß dem Oberbegriff des Anspruchs 7.

Eine Fahrzeugleuchte umfasst beispielsweise einen im Wesentlichen von einem Leuchtengehäuse und einer Lichtscheibe umschlossenen Leuchteninnenraum und mindestens ein gegebenenfalls zumindest zum Teil darin beherbergtes, mindestens eine Lichtquelle umfassendes Leuchtmittel für wenigstens eine Lichtfunktion der Fahrzeugleuchte.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte. Beispiele für Fahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Lichtfunktion muss dabei eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Eine insbesondere bei Heckleuchten anzutreffende Besonderheit stellen so genannte adaptive Lichtfunktionen dar. Eine adaptive Lichtfunktion erfüllt eine über deren vorgesehene, normale Funktion hinausgehende, gegebenenfalls zusätzliche Funktion.

Ein prominentes Beispiel ist eine von einzelnen Herstellern auch aktives Bremslicht oder dynamisches Bremslicht genannte adaptive Bremslichtfunktion.

Adaptiv ist in diesem Zusammenhang als in mindestens zwei Eskalationsstufen anpassungsfähig zu verstehen, im Fall einer Bremslichtfunktion meistens zweistufig.

Deren über die normale Funktion eines Aufleuchtens bei Betätigung der Betriebsbremse hinausgehende Funktion liegt in einer Information nachfolgender Verkehrsteilnehmer über die Stärke der vom vorausfahrenden Fahrzeug ausgeführten Bremsung durch zusätzliche Hervorhebung der Bremslichtfunktion. Dabei wird die adaptive Bremslichtfunktion nicht nur verwendet, um eine Bereitschaft oder Betätigung der Betriebsbremse anzuzeigen, was durch deren bestimmungsgemäßes Aufleuchten ab einem leichten Niederdrücken des Bremspedals erfolgt, sondern zusätzlich, um den nachfolgenden Verkehr über die Stärke der Bremsung zu informieren, was beispielsweise durch Hinzufügen zusätzlicher Leuchtflächen und damit einhergehend Vergrößerung der bei aktiver Bremslichtfunktion aufleuchtenden Leuchtfläche beispielsweise oberhalb eines Schwellenwerts des vermittels des Bremspedals aufgebrachten Bremsdrucks erfolgen kann. Diese adaptive Bremslichtfunktion unterscheidet nicht zwischen einer normalen Betätigung der Betriebsbremse und einer Notbremsung, sondern lediglich zwischen leichter und starker Betätigung der Betriebsbremse. Bei letzterer muss es sich demnach nicht unbedingt um eine Notbremsung handeln. Bei normaler Betätigung der Betriebsbremse leuchtet eine Leuchtfläche einer Heckleuchte je Seite des Fahrzeugs auf. Bei einer starken Betätigung der Betriebsbremse leuchten je zwei Leuchtflächen einer Heckleuchte je Seite des Fahrzeugs auf. Dabei handelt es sich typischerweise um die bei Erfüllung der normalen Bremslichtfunktion aufleuchtende Leuchtfläche sowie um eine zusätzliche Leuchtfläche, beispielsweise zusätzlich um die Leuchtfläche der Nebelschlusslichtfunktion an beiden Seiten. Alternativ oder zusätzlich können alle in einer höchsten Eskalationsstufe einer adaptiven Bremslichtfunktion aktiven Leuchtflächen deutlich heller als bei einer normalen Betätigung der Betriebsbremse leuchten.

Aus dem Stand der Technik ist bekannt, anhand des Bremsdrucks, der Betätigungsgeschwindigkeit des Bremspedals, der Fahrgeschwindigkeit, dem Vergleich der vermittels eines Beschleunigungssensors ermittelten tatsächlichen und der anhand eines Bremsdrucksensors ermittelten gewünschten Verzögerung, der Haftreibung zwischen Reifen und Fahrbahn, der Aktivierung von Bremsassistenzfunktionen, wie etwa einem Antiblockiersystem (ABS), einem elektronischen Stabilitätsprogramm (ESP) und/oder einem umgebungsüberwachenden Notbremssystem, eine Gefahrensituation zu erkennen und im Fall deren Auftretens eine Aktivierung der Bremslichtfunktion sowie zusätzlich oder alternativ bei bereits aktiver Bremslichtfunktion deren Hervorhebung zu veranlassen.

Dabei gibt es verschiedene Arten der Hervorhebung von adaptiven Bremslichtfunktionen beziehungsweise Notbremsanzeigen.

Bei einer adaptiven Bremslichtfunktion mit Notbremserkennung leuchtet die Bremslichtfunktion bei einer normalen Betätigung der Betriebsbremse wie bei jedem anderen Kraftfahrzeug auf. Bei einer Notbremsung allerdings blinken die Bremslichter mehrmals pro Sekunde. Dadurch wird der nachfolgende Verkehr gewarnt und die Reaktionszeit laut einer Studie verkürzt. Wird bis zum Stillstand gebremst, schaltet sich anschließend die Warnblinkanlage ein, indem an allen am Fahrzeug zur Erfüllung der Wiederholblinklichtfunktion verbauten Fahrzeugleuchten die Wiederholblinklichtfunktion aktiviert wird. Eine Deaktivierung der Warnblinkanlage kann automatisch durch Fortsetzen der Fahrt oder manuell durch Betätigen der Warnblinktaste erfolgen.

Darüber hinaus ist bekannt, eine adaptive Bremslichtfunktion erst bei starken Verzögerungen bei Fahrgeschwindigkeiten oberhalb eines Schwellenwerts für die Fahrgeschwindigkeit von beispielsweise mehr als 60 km/h vorzusehen.

Ferner ist bekannt, dass bei bis zum Stillstand des Fahrzeugs aktiver adaptiver Bremslichtfunktion die Bremslichtfunktion dauerhaft eingeschaltet bleibt, sobald das Fahrzeug steht, auch in Kombination mit einer Aktivierung der Warnblinkanlage.

Auch gibt es adaptive Bremslichtfunktionen, bei denen der nachfolgende Verkehr bei einer Notbremsung durch automatisches Einschalten der Warnblinkanlage gewarnt wird.

Zur Nachrüstung älterer Fahrzeuge ist ein automatisches Warnblinksystem bekannt, bei dem vom Steuergerät des Fahrzeugs bei einer Notbremsung oder einem Unfall automatisch die Warnblinkanlage eingeschaltet wird und zusätzlich eine der dritten Bremsleuchte vergleichbare hochgesetzte Warnblinkleuchte mit erhöhter Frequenz blinkt. Abgeschaltet wird das Warnsignal mit dem Warnblinklichtschalter.

Den beschriebenen adaptiven Lichtfunktionen gemein ist, dass sie alle anhand Auswertung eines oder mehrerer durch das fahrzeugeigene Steuergerät sensorisch erfasster Parameter ausgelöst werden und dass darüber hinaus auch deren beispielsweise stufenweise Aktivierung und Deaktivierung, kurz deren Steuerung ebenfalls durch das Steuergerät des Fahrzeugs vorgenommen wird.

Nachteilig hieran ist, dass das Steuergerät eine Bremssituation nicht wirklich erkennen, sondern sich lediglich auf physikalische Parameter berufen kann, die ihm gegeben werden, um daraus die Signalisierung mittels einer oder mehrerer Lichtfunktionen an den Fahrzeugleuchten der bewerteten Situation entsprechend anzupassen.

Dabei muss in den meisten heutigen Kraftfahrzeugen ein starker Druck auf das Bremspedal ausgeführt worden sein, um die besondere Signalisierung zu initiieren.

Um auszuschließen, dass wegen einer unnötiger Bremswegverkürzung durch eine fälschliche Notbremsanzeige für nachfolgende Fahrzeuge Gefahrensituationen einhergehend mit hieraus resultierenden Auffahrunfällen entstehen, muss das Steuergerät eine Notbremsung sicher erkennen. Hierzu wesentliche Parameter wie der Abstand zu einem Hindernis, sei es das vorausfahrende Fahrzeug oder ein anderes plötzlich auftretendes Hindernis, wie etwa Personen, Tiere oder Traktoren, werden von den meisten heutigen Fahrzeugen nicht erfasst, somit kann auch der vorhandener Zeitund Wegstreckenspielraum für eine Notbremsung nicht durch das Steuergerät erkannt und für Berechnungen genutzt werden.

Ein noch viel schwerer wiegender Nachteil der bekannten adaptiven Bremslichtfunktionen ist, dass eine Unterbrechung einer einzelnen Steuerleitung zum Ausfall einer solchen, nachweislich die Verkehrssicherheit erhöhenden Lichtfunktion führen kann.

Durch DE 10 2004 027 932 A1 ist eine fahr- und lichtsituationsabhängig dimmbare Heckleuchte mit integriertem Sensor und externem Steuergerät bekannt. Bei dem mindestens einen integrierten Sensor handelt es sich um einen optischen Sensor.

Durch DE 10 2013 218 152 A1 ist bekannt, mittels eines Beschleunigungssensors die Stellung einer Heckklappe zu überwachen und hiervon abhängig die Lichtfunktionen einer an der Heckklappe angeordneten Heckleuchte ab- und wiederanzuschalten sowie gegebenenfalls durch eine unabhängig von der Heckklappe fahrzeugseitig angeordnete Heckleuchte zu erfüllen.

Durch JP H07 156709 A und CN 2 196 579 ist eine beschleunigungssensorgesteuerte Bremslichtfunktion bekannt.

Durch DE 10 2005 055 009 A1 sind eine beispielsweise zwei Heckleuchten umfassende Fahrzeugleuchtenanordnung und ein Verfahren zu deren Betrieb bekannt. Dabei ist vorgesehen, eine Kommunikationsverbindung zwischen einem Bedienmodul mit einer die Lichtfunktionen der Heckleuchten koordinierenden Steuereinheit und den Heckleuchten zu überwachen. Wird ein Ausfall der Kommunikationsverbindung festgestellt, so bedienen sich in die Heckleuchten integrierte Steuereinheiten der Ausgangssignale von ebenfalls in die Heckleuchten integrierten Sensoren, um wenigstens eine erste Lichtfunktion jeder der Heckleuchten unabhängig von der Kommunikationsverbindung anzusteuern. Dabei kann je ein Beschleunigungssensor in den Heckleuchten untergebracht sein, abhängig von deren Ausgangssignal die jeweils in die Heckleuchten integrierten Steuereinheiten zusätzlich zu der ersten Lichtfunktion eine weitere Lichtfunktion - vornehmlich jeweils die Bremslichtfunktion - je Heckleuchte aktivieren.

Durch US 6,411,204 B1 ist bekannt, in einem Fahrzeug einen Beschleunigungssensor vorzusehen, dessen Ausgangssignale mittels einer Schaltung mit einem oder mehreren Schwellenwerten verglichen werden. Bei Überschreitung eines dieser Schwellenwerte leuchtet eine Anzeigeeinrichtung auf. Bei der Anzeigeeinrichtung kann es sich um eine hoch gesetzte dritte Bremsleuchte, ein auch als Central, High-Mounted Stop Light (CHMSL) bezeichnetes, so genanntes Central, High-Mounted Braking Light handeln, aber auch um andere, Licht in die Umgebung abstrahlende Fahrzeugleuchten, wie etwa Heckleuchten, Frontscheinwerfer, separat angeordnete Fahrtrichtungsanzeiger, aber auch um eine eigens hierfür vorgesehene Signalisierungsvorrichtung. Im Falle eines CHMSL können die Schaltung und der Beschleunigungssensor innerhalb der Fahrzeugleuchte untergebracht sein.

Durch DE 198 45 679 A1 ist ein an und in einem Fahrzeug verteilt angeordnetes Leuchtensystem mit mindestens einer Bremsleuchte und einem Beschleunigungssensor bekannt. Ist das Fahrzeug in einen Unfall verwickelt, schalten sich sowohl die Warnleuchten, als auch die dritte Bremsleuchte mit einem gelben Blinklicht ein.

Durch WO 2012/110719 A1 ist ein Leuchtmittel für eine Bremslichtfunktion einer Fahrzeugleuchte mit mindestens einer Lichtquelle bekannt. Diese umfasst einen ein zumindest einer Bremsverzögerung proportionales Beschleunigungssignal ausgebenden Beschleunigungssensor und eine mit dem Beschleunigungssensor und zumindest einer Lichtquelle des Leuchtmittels verbundene Steuereinheit. Die Steuereinheit wertet das Beschleunigungssignal aus, vergleicht die so erhaltene Bremsverzögerung mit wenigstens einem vorgegebenen Schwellenwert einer kritischen Bremsverzögerung und steuert abhängig vom Ergebnis dieses Vergleichs zur Verwirklichung einer adaptiven Bremslichtfunktion bei einer Überschreitung des Schwellenwerts die mindestens eine mit ihr verbundene, zur Erfüllung der Bremslichtfunktion der Fahrzeugleuchte vorgesehene Lichtquelle mindestens einmalig zumindest kurzzeitig an.

Durch WO 2009/116032 A2 ist ein Leuchtmittel zur Erfüllung einer Bremslichtfunktion einer Fahrzeugleuchte bekannt. Das Leuchtmittel umfasst einen ein zumindest einer Bremsverzögerung proportionales Beschleunigungssignal ausgebenden Beschleunigungssensor und eine mit dem Beschleunigungssensor verbundene Steuereinheit. Die Steuereinheit wertet das Beschleunigungssignal aus, vergleicht die so erhaltene Bremsverzögerung mit wenigstens einem vorgegebenen Schwellenwert einer kritischen Bremsverzögerung und steuert abhängig vom Ergebnis dieses Vergleichs eine mit ihr verbundene Lichtquelle des Leuchtmittels mindestens einmalig zumindest kurzzeitig an. Eine Batterie erlaubt den Betrieb unabhängig vom Bordnetz eines Fahrzeugs.

Durch FR 2 801 548 A1 ist eine Anordnung umfassend einen Beschelunigungssensor bekannt, die in einem Fahrzeug angeordnet die Intensität einer Verzögerung des Fahrzeugs erfasst. Ab Überschreitung eines Schwellenwerts wird eine Lichtwarnung F ausgegeben.

Durch DE 10 2005 043 058 A1 ist bekannt, ein Leuchtmittel einer Fahrzeugleuchte in Abhängigkeit von einem Ausgangssignal eines Beschleunigungssensors in der Fahrzeugleuchte zu steuern.

Durch US 5,736,926 ist bekannt, einen Beschleunigungssensor und eine Steuereinheit in ein Leuchtmittel in Form einer als Glühbirne ausgebildeten und zur Erfüllung einer Bremslichtfunktion einer Fahrzeugleuchte vorgesehenen Lichtquelle zu integrieren. Der Beschleunigungssensor und die Steuereinheit sind hierbei in der Fassung der Glühbirne untergebracht.

Durch ES 2 353 709 A1 ist eine Bremsleuchte bekannt, umfassend eine Reihe von LEDs, die an eine Steuereinheit mit einem Beschleunigungssensor und einem Microcontroller angeschlossen sind. Der Microcontroller steuert die LEDs derart an, dass diese proportional zur Stärke der erfassten Verzögerung pulsierend aufleuchten.

Durch US H2001 H ist bekannt, ein CHMSL abhängig von verschiedenen momentanen Zustandsgrößen eines Fahrzeugs anzusteuern.

Durch DE 102 27 115 A1 ist eine Bremsleuchte bekannt, die mit Hilfe eines Beschleunigungssignals die Stärke einer Bremsverzögerung durch Vergrößerung und Verkleinerung der Leuchtfläche der Bremslichtfunktion anzeigt.

Durch DE 197 12 457 A1 ist ein System zur Ansteuerung einer Bremslichtfunktion einer Fahrzeugleuchte bekannt, welches ein einen Verzögerungsvorgang eines Kraftfahrzeugs repräsentierendes Signal erzeugt.

Eine Aufgabe der Erfindung ist es, eine Fahrzeugleuchte und ein Verfahren zum Betrieb einer solchen Fahrzeugleuchte zu entwickeln, welche die Verkehrssicherheit nachhaltig erhöhen.

Die Aufgabe wird jeweils durch die Merkmale der unabhängigen Ansprüche gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung sieht zur Lösung der gestellten Aufgabe einen in eine Heckleuchte integrierten Beschleunigungssensor sowie eine mit diesem und wenigstens einem zur Erfüllung einer Lichtfunktion, beispielsweise der Bremslichtfunktion vorgesehenen Leuchtmittel mit mindestens einer Lichtquelle gekoppelte Steuerschaltung vor, welche einer momentanen Beschleunigung entsprechende Ausgangssignale des Beschleunigungssensors auswertet und mit mindestens einem Schwellenwert vergleicht, oberhalb dem eine adaptive Bremslichfunktion ausgelöst wird durch ein beispielsweise blinkendes Aufleuchten der Bremslichtfunktion und durch eine Einbeziehung der Leuchtflächen anderer Lichtfunktionen zur Darstellung und/oder Hervorhebung der Bremslichtfunktion.

Im Speziellen betrifft ein erster Gegenstand der Erfindung demnach eine Fahrzeugleuchte mit mindestens einem wenigstens eine Lichtquelle umfassenden Leuchtmittel zur Erfüllung zumindest einer Lichtfunktion der Fahrzeugleuchte.

Die Fahrzeugleuchte kann einen von einem Leuchtengehäuse und einer Lichtscheibe zumindest teilweise umschlossenen, das mindestens eine Leuchtmittel vorzugsweise wenigstens zum Teil beherbergenden Leuchteninnenraum umfassen.

Die Lichtscheibe ist durch eine heutzutage meist aus einem Kunststoff hergestellte, transparente, farbneutrale und/oder mindestens teilweise eingefärbte

Abdeckung gebildet, welche wenigstens eine im Leuchtengehäuse freigehaltene Lichtaustrittsfläche und damit den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Den gegebenenfalls mehreren Lichtfunktionen der Fahrzeugleuchte können zum Teil unterschiedliche Helligkeiten beziehungsweise Sichtweiten sowie zum Teil unterschiedliche Lichtfarben zugeordnet sein.

Wenigstens einer Lichtquelle des Leuchtmittels einer Fahrzeugleuchte können ein oder mehrere zur Ausformung einer Lichtverteilung beitragende Optikelemente zur Lichtlenkung zugeordnet sein.

Das Leuchtengehäuse bzw. der Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche Lichtfunktionen und/oder jede Kammer eine andere Lichtfunktion erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln.

Beispielsweise kann in dem Leuchteninnenraum mindestens ein hinter wenigstens einer Lichtquelle zumindest eines Leuchtmittels angeordneter Reflektor untergebracht sein. Der Reflektor kann zumindest zum Teil durch ein separates Bauteil und/oder durch wenigstens einen Teil des Leuchtengehäuses selbst gebildet sein, beispielsweise vermittels einer zumindest teilweisen, reflektierenden Beschichtung.

Die Lichtscheibe selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Die Fahrzeugleuchte umfasst mindestens einen ein zumindest einer der Erdbeschleunigung überlagerten Beschleunigung proportionales Beschleunigungssignal ausgebenden Beschleunigungssensor und eine mit diesem und zumindest einem Leuchtmittel der Fahrzeugleuchte verbundene Steuereinheit. Die Steuereinheit wertet das Beschleunigungssignal aus und ermittelt so eine Bremsverzögerung, welcher die Fahrzeugleuchte momentan ausgesetzt ist. Die Steuereinheit vergleicht die anhand des Beschleunigungssignals ermittelte Bremsverzögerung mit wenigstens einem vorgegebenen Schwellenwert einer kritischen Bremsverzögerung. Abhängig vom Ergebnis dieses Vergleichs steuert die Steuereinheit zur Verwirklichung einer adaptiven Bremslichtfunktion bei einer Überschreitung des Schwellenwerts mindestens ein mit ihr verbundenes, zur Erfüllung wenigstens einer Lichtfunktion der Fahrzeugleuchte vorgesehenes Leuchtmittel mindestens einmalig zumindest kurzzeitig an. Beispielsweise aktiviert die Steuereinheit ein Leuchtmittel und damit die von diesem verwirklichte Lichtfunktion, sofern dieses, beziehungsweise diese noch nicht aktiv ist. Alternativ kann die Steuereinheit ein Leuchtmittel und damit die von diesem verwirklichte Lichtfunktion beispielsweise mindestens einmalig kurzzeitig deaktivieren, sofern dieses beziehungsweise diese bereits aktiv ist. Alternativ oder zusätzlich kann die Steuereinheit ein Leuchtmittel und damit die von diesem verwirklichte Lichtfunktion, sofern dieses, beziehungsweise diese bereits aktiv ist, mindestens einmalig zumindest kurzzeitig verstärkt aufzuleuchten veranlassen, beispielsweise durch eine höhere Bestromung und/oder eine Verkürzung der stromfreien Taktpartien einer pulsweitenmodulationsgesteuerten Stromversorgung der mindestens einen Lichtquelle des zur Erfüllung der Lichtfunktion vorgesehenen oder zumindest beitragenden Leuchtmittels.

Ist eine oberhalb des Schwellenwerts einer kritischen Bremsverzögerung von der Steuereinheit mindestens einmalig zumindest kurzzeitig angesteuerte Lichtfunktion der Fahrzeugleuchte vor Überschreitung des Schwellenwerts einer kritischen Bremsverzögerung inaktiv, so kann die Lichtfunktion demnach mindestens einmalig kurzzeitig aktiviert werden, in dem Sinne, dass die zumindest kurzzeitige, mindestens einmalige Ansteuerung einer vorherig inaktiven Lichtfunktion deren zumindest einmalige, wenigstens kurzzeitige Aufschaltung auf eine Stromversorgung zur Folge hat.

Ist eine oberhalb des Schwellenwerts einer kritischen Bremsverzögerung von der Steuereinheit mindestens einmalig zumindest kurzzeitig angesteuerte Lichtfunktion der Fahrzeugleuchte bereits vor Überschreitung des Schwellenwerts einer kritischen Bremsverzögerung aktiv, so kann die Lichtfunktion demnach mindestens einmalig kurzzeitig deaktiviert werden, in dem Sinne, dass die zumindest kurzzeitige, mindestens einmalige Ansteuerung einer bereits vorherig aktiven Lichtfunktion deren zumindest einmalige, kurzzeitige Abschaltung zur Folge hat.

Ist eine oberhalb des Schwellenwerts einer kritischen Bremsverzögerung von der Steuereinheit mindestens einmalig zumindest kurzzeitig angesteuerte Lichtfunktion der Fahrzeugleuchte bereits vor Überschreitung des Schwellenwerts einer kritischen Bremsverzögerung aktiv, so kann die Lichtfunktion demnach mindestens einmalig kurzzeitig zumindest zeitweilig verstärkt aufzuleuchten veranlasst werden, in dem Sinne, dass die zumindest kurzzeitige, mindestens einmalige Ansteuerung einer bereits vorherig aktiven Lichtfunktion deren zumindest einmaliges, wenigstens kurzzeitiges verstärktes Aufleuchten zur Folge hat.

Die Begriffe Aufschaltung auf eine Stromversorgung sowie Abschaltung beziehungsweise Trennung von einer Stromversorgung sind dahingehend zu verstehen, dass Stromunterbrechnungsschaltungen mehr und mehr durch Halbleiterbauelemente verwirklicht werden, die im Gegensatz zu einer durch mechanische Schalter und Relais verwirklichten galvanischen Trennung zumindest einen - wenn auch geringen - Blindstrom passieren lassen können, der dann jedoch nicht ausreicht, eine so von einer Stromversorgung getrennte Einrichtung, beispielsweise eine Lichtquelle oder eine Schaltungsanordnung, bestimmungsgemäß zu betreiben. Demnach ist im aufgeschalteten Zustand eine Lichtquelle zumindest hinreichend stromdurchflossen, um Licht zumindest innerhalb des als sichtbarer Bereich bezeichneten, für das menschliche Auge wahrnehmbaren Teils des elektromagnetischen Spektrums abzustrahlen, wohingegen im abgeschalteten Zustand eine Lichtquelle dunkel erscheint.

Bei zumindest einer Lichtfunktion der Fahrzeugleuchte handelt es sich um eine von einer Bremslichtfunktion verschiedene Lichtfunktion.

Ein Schwellenwert kann einer gesetzlich vorgegebenen Mindestverzögerung von Kraftfahrzeugen gleich sein. Beispielsweise schreibt die Straßenverkehrsordnung in Deutschland eine mit der Betriebsbremse zu erzielende Mindestverzögerung von 5 ms⁻² gesetzlich vor.

Ein Schwellenwert kann einer unterhalb einer für Kraftfahrzeuge erzielbaren Bremsverzögerung liegenden Beschleunigung entsprechen, beispielsweise 8 ms⁻².

Ein Schwellenwert kann einer oberhalb einer für Kraftfahrzeuge maximal erzielbaren Bremsverzögerung liegenden Beschleunigung von beispielsweise 11 ms⁻² entsprechen. Eine solche Verzögerung tritt beispielsweise im Kollisionsfall auf, wenn es zu einer verstärkten Verzögerung durch einen Aufprall kommt. In diesem Fall kann beispielsweise eine Wiederholblinklichfunktion der Fahrzeugleuchte dauerhaft aktiviert werden.

Die Fahrzeugleuchte kann zusätzlich einen Temperatursensor umfassen, der ein einer Außentemperatur proportionales Temperatursignal ausgibt. Die Steuereinheit ist ebenfalls mit dem Temperatursensor verbunden. Sie passt den Schwellenwert einer kritischen Bremsverzögerung dem Temperatursignal an, wobei zumindest ein erster Schwellenwert mit sinkender Außentemperatur herabgesetzt wird.

Die Fahrzeugleuchte kann einen elektrischen Energiespeicher umfassen. Ein solcher elektrischer Energiespeicher, als welcher ohne Anspruch auf Vollständigkeit der nachfolgenden Auflistung beispielsweise ein wiederaufladbarer Akkumulator, ein kapazitiver Speicher, oder eine Batterie denkbar sind, ermöglicht den Betrieb zumindest der höchsten Eskalationsstufe der adaptiven Bremslichtfunktion unabhängig von einer Verbindung der Fahrzeugleuchte zum Fahrzeug.

Einhergehend mit einem in die Fahrzeugleuchte integrierten elektrischen Energiespeicher ist die Fahrzeugleuchte noch nicht einmal auf einen Fortbestand einer Verbindung mit dem Bordnetz des Fahrzeugs angewiesen, sondern kann unabhängig von ihrer vorherigen Funktion oder Nichtfunktion eine kritische Verzögerungssituation dem nachfolgenden Verkehr signalisieren.

Dabei ist die Fahrzeugleuchte sowohl unabhängig von einer elektrischen, als auch von einer mechanische Verbindung, die beide unterbrochen sein können. Wird eine solche Fahrzeugleuchte bei einem Unfall vom Rest des Fahrzeugs getrennt, ist sie durch den energiespeichergestützten Betrieb mindestens einer Lichtfunktion für andere Verkehrsteilnehmer deutlich sichtbar und verringert hierdurch die Gefahr von Folgeunfällen.

Wichtig ist hervorzuheben, dass der Beschleunigungssensor und/oder die Steuereinheit zumindest zum Teil in einem Leuchteninnenraum beherbergt sein können. Alternativ können sie in ein Leuchtengehäuse oder in eine Lichtscheibe der Fahrzeugleuchte integriert sein, beispielsweise indem dieses wenigstens teilweise als ein spritgegossener Leiterbahnträger ausgebildet sein kann. Denkbar ist auch eine Einbringung durch Umspritzen in einem zur Herstellung des Leuchtengehäuses oder der Lichtscheibe vorgesehenen Spritzgusswerkzeug.

Es ist ebenfalls wichtig hervorzuheben, dass der Beschleunigungssensor und/oder die Steuereinheit Teil eines zur Erfüllung oder zumindest zum Beitrag einer Lichtfunktion der Fahrzeugleuchte vorgesehenen Leuchtmittels sein können.

Ein zweiter Gegenstand der Erfindung betrifft ein Verfahren zum Betrieb einer zuvor beschriebenen Fahrzeugleuchte, die mit mindestens einem Leuchtmittel mit wenigstens einer Lichtquelle zur Erfüllung und/oder zum Beitrag zu zumindest einer Lichtfunktion der Fahrzeugleuchte, einem Beschleunigungssensor und einer mit diesem und mit dem Leuchtmittel verbundenen Steuereinheit ausgestattet ist.

Das Verfahren sieht eine leuchteninterne und dadurch fahrzeugunabhängige Erfassung einer Bremsverzögerung anhand eines innerhalb der Fahrzeugleuchte angeordneten, ein einer der Erdbeschleunigung überlagerten Beschleunigung proportionales Beschleunigungssignal ausgebenden Beschleunigungssensors vor. Das Verfahren sieht dabei vor, anhand des Beschleunigungssignals die Bremsverzögerung zu bestimmen, welcher die Fahrzeugleuchte momentan ausgesetzt ist.

Das Verfahren sieht vor, diese unabhängig von einem Fahrzeug und in diesem verbauten Sensoren und Einrichtungen innerhalb der Fahrzeugleuchte erfasste Bremsverzögerung wiederum innerhalb der Fahrzeugleuchte und damit ebenfalls autark von einem Fahrzeug beziehungsweise von einer fahrzeugspezifischen Einrichtung mit mindestens einem vorgegebenen Schwellenwert einer kritischen Bremsverzögerung zu vergleichen.

Das Ergebnis dieses Vergleichs ist die Feststellung, ob ein vorgegebener beziehungsweise der vorgegebene Schwellenwert einer kritischen Bremsverzögerung überschritten ist, oder nicht. Sind mehrere Schwellenwerte einer kritischen Bremsverzögerung vorgegeben, so ist das Ergebnis darüber hinaus, welcher oder welche der vorgegebenen Schwellenwerte überschritten ist beziehungsweise sind.

Das Verfahren sieht ferner vor, abhängig vom Ergebnis des Vergleichs bei einer Überschreitung mindestens eines Schwellenwerts mindestens eine Lichtfunktion der Fahrzeugleuchte mindestens einmalig zumindest kurzzeitig anzusteuern, beispielsweise zu aktivieren, sofern diese Lichtfunktion noch nicht aktiv ist, oder beispielsweise mindestens einmalig kurzzeitig zu deaktivieren, sofern diese Lichtfunktion bereits aktiv ist, oder beispielsweise mindestens einmalig zumindest kurzzeitig verstärkt aufzuleuchten zu veranlassen, beispielsweise durch eine höhere Bestromung und/oder eine Verkürzung der stromfreien Taktpartien einer pulsweitenmodulationsgesteuerten Stromversorgung der mindestens einen Lichtquelle des zur Erfüllung der Lichtfunktion vorgesehenen oder zumindest beitragenden Leuchtmittels, sofern diese Lichtfunktion bereits aktiv ist.

Dabei können mit zunehmender Anzahl der überschrittenen Schwellenwerte kritischer Bremsverzögerungen ähnlich einer zunehmenden Anzahl von Eskalationsstufen die genannten Maßnahmen auch kombiniert und/oder eine oder mehrere weitere Lichtfunktionen entsprechend zusätzlich angesteuert werden.

Als vorgegebene Schwellenwerte kritischer Bremsverzögerungen kommen beispielsweise eine gesetzlich vorgegebenen Mindestverzögerung von Kraftfahrzeugen, eine unterhalb einer für Kraftfahrzeuge erzielbaren Bremsverzögerung liegende Beschleunigung, eine oberhalb einer für Kraftfahrzeuge maximal erzielbaren Bremsverzögerung liegende Beschleunigung in Frage.

Die Straßenverkehrsordnung in Deutschland schreibt beispielsweise eine mit der Betriebsbremse zu erzielende Mindestverzögerung von 5 ms⁻² gesetzlich vor.

Eine oberhalb einer für Kraftfahrzeuge maximal erzielbaren Bremsverzögerung liegenden Beschleunigung von beispielsweise 11 ms⁻² tritt beispielsweise im Kollisionsfall auf, wenn es zu einer verstärkten Verzögerung durch einen Aufprall kommt.

In den genannten Fällen kann unabhängig von einer vorher aktiven Bremslichtfunktion vorteilhaft eine Wiederholblinklichfunktion der Fahrzeugleuchte aktiviert werden.

Denkbar ist in Zusammenhang mit einer letztgenannten oberhalb einer für Kraftfahrzeuge maximal erzielbaren Bremsverzögerung liegenden Beschleunigung eine dauerhafte Aktivierung einer Wiederholblinklichtfunktion, zumindest so lange, bis erneut eine nunmehr jedoch einer erneuten Fahrtaufnahme eines Fahrzeugs gleichkommende Beschleunigung festgestellt wird.

Das Verfahren kann zusätzlich eine vorzugsweise ebenfalls innerhalb der Fahrzeugleuchte autarke Erfassung einer Umgebungstemperatur vorsehen. Das Verfahren kann dabei einen Vergleich mit mindestens einem Temperaturgrenzwert vorsehen, unterhalb dem Straßen- Witterungsverhältnisse herrschen können, bei denen die von einem Fahrzeug zu erzielenden Bremsverzögerungen herabgesetzt sind. Dementsprechend kann das Verfahren bei einer Unterschreitung eines entsprechenden Temperaturgrenzwerts von beispielsweise +3° C eine Herabsetzung mindestens eines Schwellenwerts einer kritischen Bremsverzögerung vorsehen, beispielsweise um einen konstanten Abminderungsfaktor von beispielsweise 80%.

Grundsätzlich ist denkbar, den Abminderungsfaktor innerhalb eines bestimmten Temperaturbereichs von beispielsweise +3° C bis -20° C kontinuierlich, beispielsweise linear herabzusetzen, beispielsweise von 100% kontinuierlich auf beispielsweise 70%.

Eine vorteilhafte Ausgestaltung des Verfahrens kann eine zumindest temporäre, autarke Energieversorgung der Fahrzeugleuchte anhand eines in die Fahrzeugleuchte integrierten elektrischen Energiespeichers vorsehen.

Dies hat den Vorteil, dass die voranstehend beschriebenen Verfahrensschritte einhergehend mit einer entsprechenden Ansteuerung einer oder mehrerer Lichtfunktionen der Fahrzeugleuchte zumindest während der Aufrechterhaltung der Energieversorgung durch die Speicherkapazität des elektrischen Energiespeichers weiterhin ausgeführt werden können und dadurch die Verkehrssicherheit auch bei einem Ausfall einer elektrischen Verbindung zum Fahrzeug beziehungsweise zu dessen elektrischem Bordnetz weiterhin nachhaltig erhöht werden kann, bis hin zu einer zusätzlichen Trennung der mechanischen Verbindung der Fahrzeugleuchte zum Fahrzeug.

Zusammengefasst sieht die Erfindung vor, mindestens einen Beschleunigungssensor in einer insbesondere als Heckleuchte ausgestalteten Fahrzeugleuchte zu integrieren, mit dem es mit einer durch eine entsprechende Auswerte-Elektronik verwirklichten Steuereinheit möglich ist, momentan auf die Fahrzeugleuchte und damit auch auf ein mit ihr verbundenes eigenes Fahrzeug einwirkende Beschleunigungen zu bestimmen und hieraus abzuleiten, ob ein Notbremsfall oder mindestens ein starker Bremszustand oberhalb eines Schwellenwerts einer kritischen Bremsverzögerung des eigenen Fahrzeugs vorliegt. Sind die Beschleunigungen entsprechend hoch, wird eine oder mehrere, ansonsten einer anderen Signalfunktionen dienende Lichtfunktionen entsprechend der unterschiedlichen Möglichkeiten in einer Fahrzeugleuchte, wie beispielsweise einleitend zu den aus dem Stand der Technik bekannten adaptiven Bremslichtfunktionen beschrieben angesteuert. Insbesondere kann dies eine auch als Fahrtrichtungsanzeigelichtfunktion (FRA) bezeichnete Wiederholblinklichtfunktion mit einbeziehen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Ein besonders hervorzuhebender Vorteil besteht in der Bereitstellung einer gemäß einem beschriebenen Verfahren betreibbaren Fahrzeugleuchte, die zur nachhaltigen Erhöhung der Verkehrssicherheit kostengünstig auch in den Fahrzeugbestand eingebracht werden kann, beispielsweise durch Nachrüstung. Im Gegensatz zum Stand der Technik benötigt die erfindungsgemäße Fahrzeugleuchte keinerlei fahrzeugseitig bereitzustellende Infrastruktur weder hinsichtlich einer fahrzeugsteuergeräteseitigen Steuerung deren adaptiver Bremslichtfunktion, noch hinsichtlich einer fahrzeugseitigen Bereitstellung von Fahrzustands- und/oder Umgebungsinformationen. Die Fahrzeugleuchte benötigt lediglich eine normale Schnittstelle, welche eine Stromversorgung und eine Signalisierung des Betriebs der von der Fahrzeugleuchte im Normalbetrieb zu erfüllenden Lichtfunktionen sicherstellt. Eine fahrzeugseitige Bereitstellung weiterer Informationen oder Steuersignale bedarf die erfindungsgemäße Fahrzeugleuchte nicht. Damit ist sie autark ohne dass in einem Fahrzeug entsprechende Sensoren verbaut und/oder entsprechende Informationen beispielsweise über ein Bus-System im Fahrzeug verteilt werden müssen einsetzbar, auch bei sehr alten und gebrauchten Fahrzeugen.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: ein Ausführungsbeispiel einer Fahrzeugleuchte mit integriertem Beschleunigungssensor zur Ansteuerung einer adaptiven Bremslichtfunktion in einem Querschnitt durch deren Leuchtengehäuse und Lichtscheibe hindurch.
- Fig. 2: ein Ausführungsbeispiel einer Fahrzeugleuchte mit integriertem Beschleunigungssensor zur Ansteuerung einer adaptiven Bremslichtfunktion in einer Draufsicht auf deren Lichtscheibe.
- Fig. 3: ein Ablaufdiagramm eines Verfahrens zum Betrieb einer Fahrzeugleuchte mit integriertem Beschleunigungssensor zur Ansteuerung einer adaptiven Bremslichtfunktion.

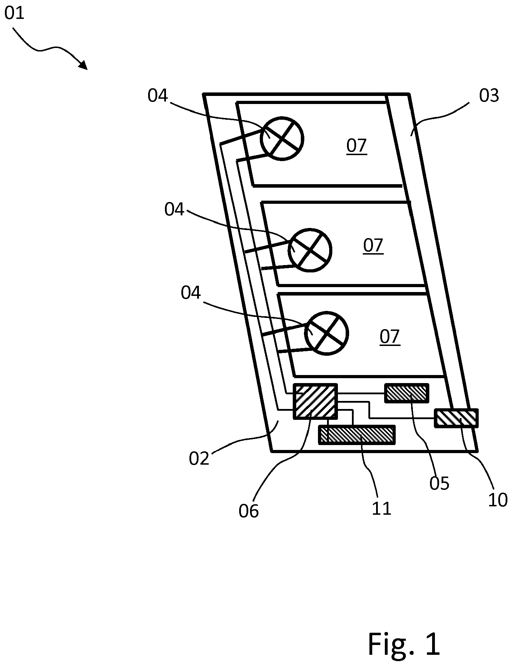

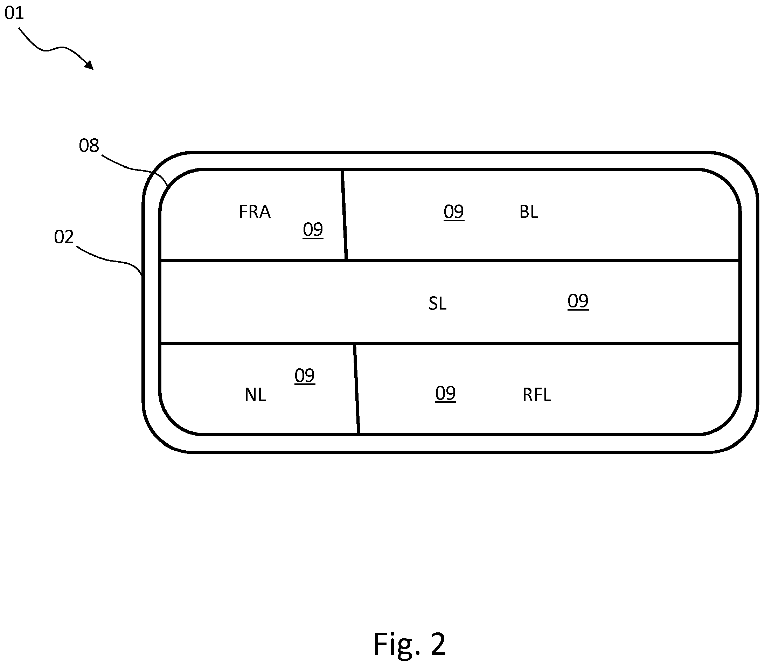

Eine in Fig. 1, Fig. 2 ganz oder in Teilen dargestellte Fahrzeugleuchte 01 mit integriertem Beschleunigungssensor 05 zur autarken Verwirklichung einer adaptiven Lichtfunktion umfasst:
- mindestens ein zur Erfüllung einer Lichtfunktion der Fahrzeugleuchte 01 vorgesehenes oder einer vorgegebenen Lichtverteilung wenigstens einer Lichtfunktion der Fahrzeugleuchte beitragendes Leuchtmittel mit wenigstens einer Lichtquelle 04,
- einen ein zumindest einer der Erdbeschleunigung überlagerten Beschleunigung entsprechenden Bremsverzögerung proportionales Beschleunigungssignal ausgebenden Beschleunigungssensor 05, und
- eine mit dem Beschleunigungssensor und zumindest einem Leuchtmittel der Fahrzeugleuchte verbundene Steuereinheit 06.

Die Steuereinheit 06 wertet das einer der Erdbeschleunigung überlagerten Beschleunigung proportionale Beschleunigungssignal aus und ermittelt hieraus eine Bremsverzögerung, welcher die Fahrzeugleuchte 01 momentan ausgesetzt ist.

Darüber hinaus vergleicht die Steuereinheit 06 die so erfasste Bremsverzögerung mit wenigstens einem vorgegebenen Schwellenwert einer kritischen Bremsverzögerung.

Abhängig vom Ergebnis dieses Vergleichs steuert die Steuereinheit 06 mindestens ein mit ihr verbundenes und mit seiner mindestens einen Lichtquelle 04 zur Erfüllung einer Lichtfunktion der Fahrzeugleuchte 01 vorgesehenes oder zumindest einer vorgegebenen Lichtverteilung wenigstens einer Lichtfunktion der Fahrzeugleuchte 01 beitragendes Leuchtmittel zur Verwirklichung einer adaptiven Bremslichtfunktion bei einer Überschreitung des Schwellenwerts mindestens einmalig zumindest kurzzeitig an.

Beispielsweise aktiviert die Steuereinheit ein Leuchtmittel und damit die von diesem verwirklichte Lichtfunktion, sofern dieses, beziehungsweise diese noch nicht aktiv ist. Alternativ kann die Steuereinheit ein Leuchtmittel und damit die von diesem verwirklichte Lichtfunktion beispielsweise mindestens einmalig kurzzeitig deaktivieren, sofern dieses beziehungsweise diese bereits aktiv ist. Alternativ oder zusätzlich kann die Steuereinheit ein Leuchtmittel und damit die von diesem verwirklichte Lichtfunktion, sofern dieses, beziehungsweise diese bereits aktiv ist, mindestens einmalig zumindest kurzzeitig verstärkt aufzuleuchten veranlassen, beispielsweise durch eine höhere Bestromung und/oder eine Verkürzung der stromfreien Taktpartien einer pulsweitenmodulationsgesteuerten Stromversorgung der mindestens einen Lichtquelle des zur Erfüllung der Lichtfunktion vorgesehenen oder zumindest beitragenden Leuchtmittels.

Die mindestens einmalige, kurzzeitige Ansteuerung kann demnach vorsehen, dass mindestens eine Lichtfunktion der Fahrzeugleuchte 01 mindestens einmalig zumindest kurzzeitig aktiviert wird, sofern diese noch nicht aktiv ist, und/oder mindestens einmalig zumindest kurzzeitig verstärkt aufleuchtet, sofern diese bereits aktiv ist, und/oder mindestens einmalig kurzzeitig deaktiviert wird, sofern diese bereits aktiv ist.

Somit kann die Steuereinheit 06 mindestens eine Lichtfunktion der Fahrzeugleuchte 01 dazu veranlassen, dass diese zur Verwirklichung der autarken adaptiven Bremslichtfunktion beispielsweise aktiviert wird, sofern diese noch nicht aktiv ist, und/oder beispielsweise mindestens einmalig kurzzeitig deaktiviert wird, sofern diese bereits aktiv ist, oder beispielsweise mindestens einmalig zumindest kurzzeitig verstärkt aufleuchtet, beispielsweise durch eine höhere Bestromung und/oder eine Verkürzung der stromfreien Taktpartien einer pulsweitenmodulationsgesteuerten Stromversorgung der mindestens einen Lichtquelle 04 des zu Ihrer Erfüllung vorgesehenen oder zumindest beitragenden Leuchtmittels, sofern diese bereits aktiv ist.

Ist eine oberhalb des Schwellenwerts einer kritischen Bremsverzögerung von der Steuereinheit mindestens einmalig zumindest kurzzeitig angesteuerte und so zur Verwirklichung einer autarken adaptiven Bremslichtfunktion herangezogene Lichtfunktion der Fahrzeugleuchte 01 vor Überschreitung des Schwellenwerts einer kritischen Bremsverzögerung inaktiv, so kann diese Lichtfunktion demnach mindestens einmalig kurzzeitig aktiviert werden, in dem Sinne, dass die zumindest kurzzeitige, mindestens einmalige Ansteuerung einer vorherig inaktiven Lichtfunktion deren zumindest einmalige, wenigstens kurzzeitige Aufschaltung auf eine Stromversorgung zur Folge hat.

Ist eine oberhalb des Schwellenwerts einer kritischen Bremsverzögerung von der Steuereinheit mindestens einmalig zumindest kurzzeitig angesteuerte und so zur Verwirklichung einer autarken adaptiven Bremslichtfunktion herangezogene Lichtfunktion der Fahrzeugleuchte 01 bereits vor Überschreitung des Schwellenwerts einer kritischen Bremsverzögerung aktiv, so kann diese Lichtfunktion demnach mindestens einmalig kurzzeitig deaktiviert werden, in dem Sinne, dass die zumindest kurzzeitige, mindestens einmalige Ansteuerung einer bereits vorherig aktiven Lichtfunktion deren zumindest einmalige, kurzzeitige Abschaltung zur Folge hat.

Ist eine oberhalb des Schwellenwerts einer kritischen Bremsverzögerung von der Steuereinheit 06 mindestens einmalig zumindest kurzzeitig angesteuerte und so zur Verwirklichung einer autarken adaptiven Bremslichtfunktion herangezogene Lichtfunktion der Fahrzeugleuchte 01 bereits vor Überschreitung des Schwellenwerts einer kritischen Bremsverzögerung aktiv, so kann die Lichtfunktion demnach mindestens einmalig kurzzeitig zumindest zeitweilig verstärkt aufzuleuchten veranlasst werden, in dem Sinne, dass die zumindest kurzzeitige, mindestens einmalige Ansteuerung einer bereits vorherig aktiven Lichtfunktion deren zumindest einmaliges, wenigstens kurzzeitiges verstärktes Aufleuchten zur Folge hat.

Sämtliche voranstehend beschriebenen Ansteuerungen verwirklichten für sich allein oder in Kombination paarweise oder alle miteinander eine adaptive Bremslichtfunktion, die unabhängig von einer fahrzeugseitigen Aktivierung die Aufmerksamkeit nachfolgender Verkehrsteilnehmer auf sich zieht und dadurch die Verkehrssicherheit nachhaltig erhöht.

Die Fahrzeugleuchte 01 kann wie in Fig. 1 dargestellt einen von einem Leuchtengehäuse 02 und einer Lichtscheibe 03 zumindest teilweise umschlossenen, das mindestens eine Leuchtmittel und dessen wenigstens eine Lichtquelle 04 vorzugsweise wenigstens zum Teil beherbergenden Leuchteninnenraum umfassen.

Die Fahrzeugleuchte 01 weist eine vom Leuchtengehäuse 02 umgebene und von der Lichtscheibe 03 verschlossene Lichtaustrittsfläche 08 auf, durch welche die zur Erfüllung der Lichtfunktionen der Fahrzeugleuchte 01 vorgesehenen und in deren Leuchteninnenraum beherbergten Lichtquellen 04 direkt und/oder durch Optikelemente umgelenkt ihr Licht durch die Lichtscheibe 03 hindurch abstrahlen.

Die Lichtscheibe 03 ist durch eine aus einem Kunststoff hergestellte, transparente, farbneutrale und/oder mindestens teilweise eingefärbte Abdeckung gebildet, welche wenigstens die im Leuchtengehäuse 02 freigehaltene Lichtaustrittsfläche 08 und damit den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Den gegebenenfalls mehreren Lichtfunktionen der Fahrzeugleuchte 01 können zum Teil unterschiedliche Helligkeiten beziehungsweise Sichtweiten sowie zum Teil unterschiedliche Lichtfarben zugeordnet sein.

Wenigstens einer Lichtquelle 04 des Leuchtmittels der Fahrzeugleuchte 01 können ein oder mehrere zur Ausformung einer Lichtverteilung beitragende Optikelemente zur Lichtlenkung zugeordnet sein.

Das Leuchtengehäuse 02 bzw. der Leuchteninnenraum kann in mehrere Kammern 07 mit jeweils eigenen Lichtquellen 04 und/oder Leuchtmitteln und/oder Optikelementen sowie gegebenenfalls Lichtscheiben 03 unterteilt sein, von denen mehrere Kammern 07 gleiche Lichtfunktionen und/oder jede Kammer 07 eine andere Lichtfunktion erfüllen kann.

Bei den erwähnten Optikelementen kann es sich um wenigstens einen Reflektor und/oder um mindestens eine Linse und/oder um eine oder mehrere im Strahlengang zwischen wenigstens einer Lichtquelle 04 eines Leuchtmittels und der Lichtscheibe 03 angeordnete Optikscheiben oder dergleichen handeln.

Beispielsweise kann in dem Leuchteninnenraum mindestens ein hinter wenigstens einer Lichtquelle 04 zumindest eines Leuchtmittels angeordneter Reflektor untergebracht sein. Der Reflektor kann zumindest zum Teil durch ein separates Bauteil und/oder durch wenigstens einen Teil des Leuchtengehäuses 02 selbst gebildet sein, beispielsweise vermittels einer zumindest teilweisen, reflektierenden Beschichtung.

Die Lichtscheibe 03 selbst kann alternativ oder zusätzlich als ein Optikelement ausgebildet sein, beispielsweise indem sie vorzugsweise an deren Innenseite mit einer zur Erzeugung einer oder mehrerer zuvor erwähnter Lichtverteilungen beitragenden optischen Struktur versehen ist. Hierdurch kann gegebenenfalls auf eine Optikscheibe verzichtet werden.

Sind im Leuchteninnenraum mehrere Kammern 07 mit zumindest zum Teil unterschiedliche Lichtfunktionen erfüllenden Lichtquellen 04 vorgesehen, so gliedert sich die Lichtaustrittsfläche 08 in mehrere Leuchtflächen 09, von denen jede der Erfüllung einer oder mehrerer Lichtfunktionen zugeordnet ist.

Fig. 2 zeigt eine solche Zuordnung. Dabei sind durch Partien der Lichtaustrittsfläche 08 gebildete Leuchtflächen 09 für eine Wiederholblinklichtfunktion zur Fahrtrichtungsanzeige FRA, für eine Bremslichtfunktion BL, für eine Schlusslichtfunktion SL, für eine Nebelschlusslichtfunktion NL und für eine Rückfahrlichtfunktion RFL vorgesehen. Die Nennung der jeweils einer durch Partien der Lichtaustrittsfläche 08 gebildeten Leuchtfläche 09 zugeordneten Lichtfunktionen ist dabei rein beispielhaft und informativ und muss bei einer Fahrzeugleuchte 01 weder vollständig wie dargestellt verwirklicht sein, noch ist sie als abschließend zu verstehen, um die Erfindung ausführen zu können.

Bei den zur Verwirklichung der adaptiven Bremslichtfunktion in Frage kommenden Lichtfunktionen handelt es sich beispielsweise um eine Wiederholblinklichtfunktion zur Fahrtrichtungsanzeige FRA und/oder um eine Schlusslichtfunktion SL und/oder um eine Nebelschlusslichtfunktion NL, und/oder um eine Kombination mehrerer Lichtfunktionen, beispielsweise mindestens einer zuvor bereits aktiven Lichtfunktion mit mindestens einer zuvor noch nicht aktiven Lichtfunktion, oder mindestens zweier zuvor bereits aktiver Lichtfunktionen, um nur einige denkbare Ausgestaltungen zu nennen.

Von einer Verwirklichung einer adaptiven Bremslichtfunktion durch eine oder unter Hinzuziehung einer Rückfahrlichtfunktion RFL wird bevorzugt abgesehen, da dies eine zu hohe Gefahr einer Blendung oder einer Schreckreaktion nachfolgender Verkehrsteilnehmer nach sich ziehen kann.

Die adaptive Bremslichtfunktion kann somit durch eine von einer Bremslichtfunktion verschiedene Lichtfunktion der Fahrzeugleuchte 01, oder zusätzlich aber auch durch eine Bremslichtfunktion BL verwirklicht werden.

Die Bremslichtfunktion BL kann dabei während der Ansteuerung als adaptive Bremslichtfunktion beispielsweise durch eine Taktung deren Stromversorgung einhergehend mit aufeinander folgenden Hell- und Dunkelphasen zumindest kurzzeitig blinken im Unterschied zu einer gewöhnlichen Anzeige einer Bremsbereitschaft oder einer Bremsbetätigung durch ein konstantbleibendes Aufleuchten währenddessen.

Gemäß der Erfindung handelt es sich bei mindestens einer bei einer Überschreitung des Schwellenwerts mindestens einmalig zumindest kurzzeitig zur Verwirklichung einer autarken adaptiven Bremslichtfunktion angesteuerten Lichtfunktion der Fahrzeugleuchte 01 um eine von einer Bremslichtfunktion BL verschiedene Lichtfunktion.

Beispielsweise kann eine von einer Bremslichtfunktion BL verschiedene zur Verwirklichung einer autarken adaptiven Bremslichtfunktion angesteuerte Lichtfunktion der Fahrzeugleuchte 01 eine Wiederholblinklichtfunktion zur Fahrtrichtungsanzeige FRA sein. Diese kann dabei während der Ansteuerung als adaptive Bremslichtfunktion beispielsweise durch eine höhere Taktung deren Hell- und Dunkelzeiten schneller blinken als für gewöhnlich.

Alternativ oder zusätzlich kann eine von einer Bremslichtfunktion BL verschiedene zur Verwirklichung einer autarken adaptiven Bremslichtfunktion angesteuerte Lichtfunktion eine Schlusslichtfunktion SL sein. Diese kann dabei während der Ansteuerung als adaptive Bremslichtfunktion beispielsweise durch eine höhere Bestromung heller aufleuchten als für gewöhnlich.

Ein Schwellenwert kann einer gesetzlich vorgegebenen Mindestverzögerung von Kraftfahrzeugen gleich sein. Beispielsweise schreibt die Straßenverkehrsordnung in Deutschland eine mit der Betriebsbremse zu erzielende Mindestverzögerung von 5 ms⁻² gesetzlich vor.

Ein Schwellenwert kann einer unterhalb einer für Kraftfahrzeuge erzielbaren Bremsverzögerung liegenden Beschleunigung entsprechen, beispielsweise 8 ms⁻².

Ein Schwellenwert kann einer oberhalb einer für Kraftfahrzeuge maximal erzielbaren Bremsverzögerung liegenden Beschleunigung von beispielsweise 11 ms⁻² entsprechen. Eine solche Verzögerung tritt beispielsweise im Kollisionsfall auf, wenn es zu einer verstärkten Verzögerung durch einen Aufprall kommt. In diesem Fall kann beispielsweise eine Wiederholblinklichfunktion der Fahrzeugleuchte 01 zur Verwirklichung einer autarken adaptiven Bremslichtfunktion oder zusätzlich zu einer durch eine andere Lichtfunktion der Fahrzeugleuchte 01 verwirklichten autarken adaptiven Bremslichtfunktion dauerhaft aktiviert werden. Eine dauerhafte Aktivierung kann hierbei entweder als dauerhaft wie gewöhnlich blinkend, oder als dauerhaft gleichbleibend leuchtend ausgestaltet sein.

Eine vorteilhafte Weiterbildung einer voranstehend beschriebenen Fahrzeugleuchte 01 sieht vor, dass sie einen ein einer Außentemperatur proportionales Temperatursignal ausgebenden und mit der Steuereinheit 06 verbundenen Temperatursensor 10 umfasst.

Die Steuereinheit 06 einer derart ausgestalteten Fahrzeugleuchte 01 kann zumindest einen Schwellenwert einer kritischen Bremsverzögerung abhängig vom Temperatursignal verändern beziehungsweise anpassen. Dabei kann vorgesehen sein, dass die Steuereinheit 06 zumindest einen ersten Schwellenwert einer kritischen Bremsverzögerung mit sinkender Außentemperatur herabsetzt, entsprechend einer mit sinkender Umgebungstemperatur zu erwartenden Verlängerung der Bremswege von Fahrzeugen.

Die Fahrzeugleuchte kann demnach zusätzlich einen Temperatursensor 10 umfassen, der ein einer Außentemperatur proportionales Temperatursignal ausgibt. Die Steuereinheit 06 ist ebenfalls mit dem Temperatursensor 10 verbunden. Sie passt den Schwellenwert einer kritischen Bremsverzögerung dem Temperatursignal an, wobei zumindest ein erster Schwellenwert mit sinkender Außentemperatur herabgesetzt wird.

Eine alternative oder zusätzliche Weiterbildung einer voranstehend beschriebenen Fahrzeugleuchte 01 sieht vor, dass sie einen elektrischen Energiespeicher 11 zur zumindest zeitweiligen Aufrechterhaltung des Betriebs der Fahrzeugleuchte 01 und/oder zumindest deren abhängig vom Beschleunigungssignal angesteuerter, adaptiver Lichtfunktion umfasst.

Ein solcher elektrischer Energiespeicher 11, beispielsweise ein wiederaufladbarer Akkumulator, ein kapazitiver Speicher, oder eine Batterie, ermöglicht den Betrieb zumindest der höchsten Eskalationsstufe der adaptiven Bremslichtfunktion unabhängig von einer Verbindung der Fahrzeugleuchte 01 zum Fahrzeug.

Einhergehend mit einem in die Fahrzeugleuchte 01 integrierten elektrischen Energiespeicher 11 ist die Fahrzeugleuchte 01 unabhängig von einem Fortbestand einer Verbindung mit dem Bordnetz eines Fahrzeugs in der Lage unabhängig von ihrer vorherigen Funktion oder Nichtfunktion eine kritische Verzögerungssituation dem nachfolgenden Verkehr zu signalisieren.

Dabei ist die Fahrzeugleuchte 01 sowohl unabhängig von einer elektrischen, als auch von einer mechanische Verbindung, die beide unterbrochen sein können. Wird eine solche Fahrzeugleuchte bei einem Unfall vom Rest des Fahrzeugs getrennt, ist sie durch den energiespeichergestützten Betrieb mindestens einer Lichtfunktion für andere Verkehrsteilnehmer deutlich sichtbar und verringert hierdurch die Gefahr von Folgeunfällen.

Wichtig ist hervorzuheben, dass der Beschleunigungssensor 05 und/oder die Steuereinheit 06 und/oder der Temperatursensor 10 und/oder der elektrische Energiespeicher 11 zumindest zum Teil in einem von einem Leuchtengehäuse 02 und einer Lichtscheibe 03 der Fahrzeugleuchte 01 ganz oder teilweise umschlossenen Leuchteninnenraum beherbergt sein können. Alternativ können sie in ein Leuchtengehäuse 02 oder in eine Lichtscheibe 03 der Fahrzeugleuchte 01 ganz oder teilweise integriert sein, beispielsweise indem beispielsweise das Leuchtengehäuse 03 wenigstens teilweise als ein spritgegossener Leiterbahnträger ausgebildet sein kann. Denkbar ist auch eine Einbringung in das Leuchtengehäuse 02 oder die Lichtscheibe 03 durch Umspritzen in einem Spritzgussprozess, indem beispielsweise unter Freihaltung der elektrischen Anschlüsse der Beschleunigungssensor 05 und/oder die Steuereinheit 06 und/oder der Temperatursensor 10 und/oder der elektrische Energiespeicher 11 in ein zur Herstellung des Leuchtengehäuses 02 oder der Lichtscheibe 03 vorgesehenes Spritzgusswerkzeug eingelegt und anschließend mit einem durch Abkühlung verhärtenden, zunächst flüssigen Kunststoff in Form des Leuchtengehäuses 02 oder der Lichtscheibe 03 umgeben werden.

Es ist ebenfalls wichtig hervorzuheben, dass der Beschleunigungssensor 05 und/oder die Steuereinheit 06 und/oder der Temperatursensor 10 und/oder der elektrische Energiespeicher 11 Teil eines zur Erfüllung oder zumindest zum Beitrag einer Lichtfunktion der Fahrzeugleuchte 01 vorgesehenen Leuchtmittels sein können.

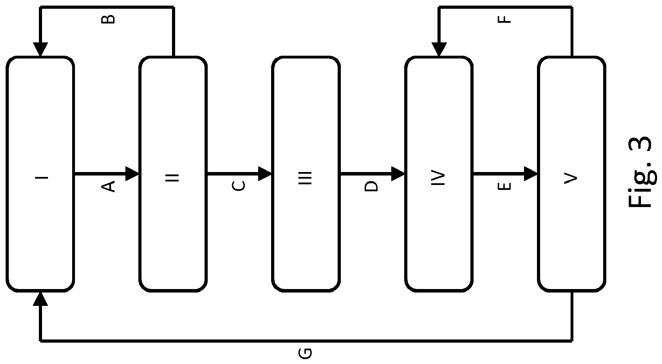

Eine voranstehend beschriebene Fahrzeugleuchte 01 erlaubt die Durchführung eines nachfolgend beschriebenen und in einem Ablauf in Fig. 3 dargestellten Verfahrens zum Betrieb einer Fahrzeugleuchte 01, die mit mindestens einem Leuchtmittel mit wenigstens einer Lichtquelle 04 zur Erfüllung und/oder zum Beitrag zu zumindest einer Lichtfunktion der Fahrzeugleuchte 01, einem Beschleunigungssensor 05 und einer mit diesem und mit dem Leuchtmittel verbundenen Steuereinheit 06 ausgestattet ist. Der Beschleunigungssensor 05 gibt ein Beschleunigungssignal aus, das einer der Erdbeschleunigung überlagerten Beschleunigung proportional ist.

Das Verfahren sieht in einem ersten Verfahrensschritt I vor, innerhalb der Fahrzeugleuchte 01 und unabhängig von in einem Fahrzeug vorgesehenen Sensoren und Einrichtungen, mit welchem die Fahrzeugleuchte 01 verbunden sein kann, vermittels der in die Fahrzeugleuchte 01 beispielsweise integrierten und/oder der von dieser umfassten und/oder der an oder in dieser angeordneten Steuereinheit 06 anhand des vermittels des Beschleunigungssensors 05 erfassten Beschleunigungssignals eine Bremsverzögerung zu ermitteln, welcher die Fahrzeugleuchte 01 momentan ausgesetzt ist.

Auf diesen ersten Verfahrensschritt I folgt wie durch einen Pfeil A in Fig. 3 dargestellt ein zweiter Verfahrensschritt II, welcher eine Durchführung eines Vergleichs der innerhalb der Fahrzeugleuchte 01 und unabhängig von einem Fahrzeug und in diesem verbauter Sensoren und Einrichtungen erfassten Bremsverzögerung mit mindestens einem vorgegebenen Schwellenwert einer kritischen Bremsverzögerung vorsieht. Die Durchführung dieses Vergleichs erfolgt wiederum vermittels der Steuereinheit 06 innerhalb der Fahrzeugleuchte 01 und damit ebenfalls autark von einem Fahrzeug beziehungsweise von einer fahrzeugspezifischen Einrichtung. Die Durchführung des Vergleichs hat eine Feststellung als Ergebnis, ob ein vorgegebener beziehungsweise der vorgegebene Schwellenwert einer kritischen Bremsverzögerung durch die aus dem einer Beschleunigung proportionalen Beschleunigungssignal ermittelte Bremsverzögerung überschritten ist, oder nicht. Sind mehrere Schwellenwerte einer kritischen Bremsverzögerung vorgegeben, so ist das Ergebnis darüber hinaus, welcher oder welche der vorgegebenen Schwellenwerte überschritten ist beziehungsweise sind. Daraufhin kann beispielsweise anhand einer mittels eines Temperatursensors 10 der Fahrzeugleuchte 01 leuchtenintern und dadurch fahrzeugunabhängig erfassten Umgebungstemperatur umgebungstemperaturabhängig entschieden werden, welcher Schwellenwert einer kritischen Bremsverzögerungen herangezogen wird beziehungsweise ob bei der vorliegenden Umgebungstemperatur der oder die überschrittenen Schwellenwerte kritischer Bremsverzögerungen herangezogen werden, um die adaptive Bremslichtfunktion zu aktivieren. Sind mehrere Schwellenwerte einer kritischen Bremsverzögerung vorgegeben, so kann im zweiten Verfahrensschritt II alternativ beispielsweise abhängig von einer vermittels eines gegebenenfalls vorgesehenen Temperatursensors 10 der Fahrzeugleuchte 01 ermittelten Temperatur ein temperaturabhängiger Schwellenwert einer kritischen Bremsverzögerung ausgewählt und zum Vergleich mit der erfassten Bremsverzögerung herangezogen werden.

Ist das Ergebnis der Durchführung des im zweiten Verfahrensschritt II vorgenommenen Vergleichs, dass ein vorgegebener beziehungsweise der vorgegebene Schwellenwert einer kritischen Bremsverzögerung durch die aus dem einer Beschleunigung proportionalen Beschleunigungssignal ermittelte Bremsverzögerung nicht überschritten ist, endet das Verfahren, oder es folgt auf den zweiten Verfahrensschritt II wieder der erste Verfahrensschritt I, wie dies in Fig. 3 durch einen Pfeil B dargestellt ist.

Der erste Verfahrensschritt I und der zweite Verfahrensschritt II können wie durch eine sich durch den Pfeil A und den Pfeil B in Fig. 3 gebildete Schleife dargestellt so lange wiederholt werden, bis das Ergebnis der Durchführung des im zweiten Verfahrensschritt II vorgenommenen Vergleichs lautet, dass ein vorgegebener beziehungsweise der vorgegebene Schwellenwert einer kritischen Bremsverzögerung durch die aus dem einer Beschleunigung proportionalen Beschleunigungssignal ermittelte Bremsverzögerung überschritten ist.

Liegt als Ergebnis der Durchführung des im zweiten Verfahrensschritt II vorgenommenen Vergleichs vor, dass ein vorgegebener beziehungsweise der vorgegebene Schwellenwert einer kritischen Bremsverzögerung durch die aus dem einer Beschleunigung proportionalen Beschleunigungssignal ermittelte Bremsverzögerung überschritten ist, folgt auf den zweiten Verfahrensschritt II ein dritter Verfahrensschritt III, wie in Fig. 3 durch einen Pfeil C dargestellt ist.

Dieser dritte Verfahrensschritt III sieht eine Verwirklichung einer adaptiven Bremslichtfunktion durch eine mindestens einmalige, zumindest kurzzeitige Ansteuerung mindestens einer Lichtfunktion der Fahrzeugleuchte 01 vor. Diese Ansteuerung erfolgt durch eine Ansteuerung mindestens eines wenigstens eine Lichtquelle 04 umfassenden und zur Erfüllung einer Lichtfunktion der Fahrzeugleuchte 01 vorgesehenen oder einer vorgegebenen Lichtverteilung einer Lichtfunktion der Fahrzeugleuchte 01 zumindest beitragenden Leuchtmittels vermittels der Steuereinheit 06 und damit ebenfalls wie alle vorangehenden Verfahrensschritte auch innerhalb der Fahrzeugleuchte 01.

Das Verfahren kann im dritten Verfahrensschritt III vorsehen, dass die mindestens einmalig zumindest kurzzeitige Ansteuerung mindestens einer Lichtfunktion der Fahrzeugleuchte 01 zur Verwirklichung der adaptiven Bremslichtfunktion vorgenommen wird, indem vermittels der Steuereinheit 06 mindestens eine Lichtfunktion der Fahrzeugleuchte 01:
- mindestens einmalig zumindest kurzzeitig aktiviert wird, sofern diese Lichtfunktion noch nicht aktiv ist, und/oder
- mindestens einmalig kurzzeitig deaktiviert wird, sofern diese Lichtfunktion bereits aktiv ist, und/oder
- mindestens einmalig zumindest kurzzeitig verstärkt aufleuchtet, sofern diese Lichtfunktion bereits aktiv ist.

Das Verfahren sieht demnach vor, abhängig vom Ergebnis des im zweiten Verfahrensschritt II vorgenommenen Vergleichs bei einer Überschreitung mindestens eines Schwellenwerts zur Verwirklichung einer adaptiven Bremslichtfunktion mindestens eine Lichtfunktion der Fahrzeugleuchte 01 mindestens einmalig zumindest kurzzeitig anzusteuern, beispielsweise zu aktivieren, sofern diese Lichtfunktion noch nicht aktiv ist, oder beispielsweise mindestens einmalig kurzzeitig zu deaktivieren, sofern diese Lichtfunktion bereits aktiv ist, oder beispielsweise mindestens einmalig zumindest kurzzeitig verstärkt aufzuleuchten zu veranlassen, beispielsweise durch eine höhere Bestromung und/oder eine Verkürzung der stromfreien Taktpartien einer pulsweitenmodulationsgesteuerten Stromversorgung der mindestens einen Lichtquelle 04 des zur Erfüllung der Lichtfunktion vorgesehenen oder zumindest beitragenden Leuchtmittels, sofern diese Lichtfunktion bereits aktiv ist.

Dabei können mit zunehmender Anzahl der als Ergebnis des im zweiten Verfahrensschritt II als überschritten festgestellten Schwellenwerte kritischer Bremsverzögerungen ähnlich einer zunehmenden Anzahl von Eskalationsstufen die genannten Maßnahmen zur Verwirklichung der adaptiven Bremslichtfunktion auch kombiniert und/oder eine oder mehrere weitere Lichtfunktionen entsprechend zusätzlich angesteuert werden.

Beispielsweise ist denkbar, auch bei einer bereits festgestellten Überschreitung eines Schwellenwerts einer kritischen Bremsverzögerung weiterhin die den Verfahrensschritt I und den Verfahrensschritt II sowie die Pfeil A und B umfassende Schleife auszuführen, beispielsweise um mit zunehmender Überschreitung weiterer Schwellenwerte kritischer Bremsverzögerungen eine Steigerung der Eskalation durch Ausweitung der adaptiven Bremslichtfunktion beispielsweise durch stufenweise Ansteuerung zusätzlicher Lichtfunktionen anzuzeigen.

Als vorgegebene Schwellenwerte kritischer Bremsverzögerungen kommen beispielsweise eine gesetzlich vorgegebenen Mindestverzögerung von Kraftfahrzeugen, eine unterhalb einer für Kraftfahrzeuge erzielbaren Bremsverzögerung liegende Beschleunigung, eine oberhalb einer für Kraftfahrzeuge maximal erzielbaren Bremsverzögerung liegende Beschleunigung in Frage.

Die Straßenverkehrsordnung in Deutschland schreibt beispielsweise eine mit der Betriebsbremse zu erzielende Mindestverzögerung von 5 ms⁻² gesetzlich vor.

Eine oberhalb einer für Kraftfahrzeuge maximal erzielbaren Bremsverzögerung liegenden Beschleunigung von beispielsweise 11 ms⁻² tritt beispielsweise im Kollisionsfall auf, wenn es zu einer verstärkten Verzögerung durch einen Aufprall kommt.

In den genannten Fällen kann unabhängig von einer vorher aktiven Bremslichtfunktion vorteilhaft eine Wiederholblinklichfunktion der Fahrzeugleuchte 01 aktiviert werden.

Denkbar ist in Zusammenhang mit einer letztgenannten oberhalb einer für Kraftfahrzeuge maximal erzielbaren Bremsverzögerung liegenden Beschleunigung eine dauerhafte Aktivierung einer Wiederholblinklichtfunktion, zumindest so lange, bis erneut eine nunmehr jedoch einer erneuten Fahrtaufnahme eines Fahrzeugs gleichkommende Beschleunigung festgestellt wird.

Das Verfahren kann wie bereits angedeutet zusätzlich eine vorzugsweise ebenfalls innerhalb der Fahrzeugleuchte 01 autarke Erfassung einer Umgebungstemperatur vorsehen. Das Verfahren kann dabei einen Vergleich mit mindestens einem Temperaturgrenzwert vorsehen, unterhalb dem Straßen-Witterungsverhältnisse herrschen können, bei denen die von einem Fahrzeug zu erzielenden Bremsverzögerungen herabgesetzt sind. Dementsprechend kann das Verfahren bei einer Unterschreitung eines entsprechenden Temperaturgrenzwerts von beispielsweise +3° C eine Herabsetzung mindestens eines Schwellenwerts einer kritischen Bremsverzögerung vorsehen, beispielsweise um einen konstanten Abminderungsfaktor von beispielsweise 80%.

Grundsätzlich ist denkbar, den Abminderungsfaktor innerhalb eines bestimmten Temperaturbereichs von beispielsweise +3° C bis -20° C kontinuierlich, beispielsweise linear herabzusetzen, beispielsweise von 100% kontinuierlich auf beispielsweise 70%.

Eine vorteilhafte Ausgestaltung des Verfahrens kann eine zumindest temporäre, autarke Energieversorgung der Fahrzeugleuchte 01 anhand eines in die Fahrzeugleuchte 01 integrierten elektrischen Energiespeichers 11 vorsehen.

Dies hat den Vorteil, dass die voranstehend beschriebenen Verfahrensschritte einhergehend mit einer entsprechenden Ansteuerung einer oder mehrerer Lichtfunktionen der Fahrzeugleuchte 01 zumindest während der Aufrechterhaltung der Energieversorgung durch die Speicherkapazität des elektrischen Energiespeichers 11 weiterhin ausgeführt werden können und dadurch die Verkehrssicherheit auch bei einem Ausfall einer elektrischen Verbindung zum Fahrzeug beziehungsweise zu dessen elektrischem Bordnetz weiterhin nachhaltig erhöht werden kann, bis hin zu einer zusätzlichen Trennung der mechanischen Verbindung der Fahrzeugleuchte 01 zum Fahrzeug.

Die adaptive Lichtfunktion wird idealerweise nicht nur im Kollisionsfall, sondern auch bei einer Bremsverzögerung im Normalbetrieb eines Fahrzeugs aktiviert, die oberhalb eines Schwellenwerts einer kritischen Bremsverzögerung liegt.

Um auch die Möglichkeit zu bieten, dass die adaptive Lichtfunktion nicht nur kurzzeitig verwirklicht wird - was beispielsweise durch eine Zeitsteuerung oder beispielsweise durch eine begrenzte Anzahl von aufeinander folgenden Hell- und Dunkelphasen zu deren Verwirklichung umgesetzt werden kann - sondern beispielsweise im Kollisionsfall zumindest zunächst dauerhaft aktiv bleibt, kann das Verfahren in einem wie durch einen Pfeil D in Fig. 3 dargestellt auf den dritten Verfahrensschritt III folgenden vierten Verfahrensschritt IV vorsehen, wiederum ein vom Beschleunigungssensor 05 erfasstes Beschleunigungssignal auszuwerten, um hieraus eine Beschleunigung zu ermitteln, welcher die Fahrzeugleuchte nach einer mit einer vorangehenden Überschreitung eines Schwellenwerts einer kritischen Bremsverzögerung einhergehenden Verwirklichung der adaptiven Bremslichtfunktion ausgesetzt ist.

Auf diesen vierten Verfahrensschritt IV kann wie in Fig. 3 durch einen Pfeil E dargestellt ein fünfter Verfahrensschritt V folgen. Dieser fünfte Verfahrensschritt V sieht einen Vergleich der ermittelten Beschleunigung zumindest mit dem Vorliegen einer Bremsverzögerung beziehungsweise einem zumindest annähernd beschleunigungsfreien Zustand vor.

Ist das Ergebnis dieses Vergleichs, dass weiterhin eine Bremsverzögerung vorliegt, so kann die adaptive Bremslichtfunktion weiterhin entsprechend ihrer vorherigen Eintrittsbedingung aktiviert bleiben. Ist die vorherige Eintrittsbedingung eine im normalen Fahrbetrieb eines Fahrzeugs auftretende Beschleunigung, kann hieraus beispielsweise eine zeitgesteuert aufrechterhaltene adaptive Bremslichtfunktion folgen, an deren zeitgesteuert nach deren Aktivierung erfolgender Deaktivierung sich nichts ändert.

Im fünften Verfahrensschritt kann jedoch zusätzlich ein Vergleich mit dem oder den vorgegebenen Schwellenwerten kritischer Bremsverzögerungen vorgenommen werden. Wird im fünften Verfahrensschritt V beispielsweise festgestellt, dass ein höherer Schwellenwert einer kritischen Bremsverzögerung als zuvor im zweiten Verfahrensschritt II überschritten wird, so kann der fünfte Verfahrensschritt V vorsehen, die adaptive Bremslichtfunktion erneut zu aktivieren. Handelt es sich bei diesem Schwellenwert um einen einer Bremsverzögerung oder einer Beschleunigung entsprechenden Schwellenwert einer kritischen Bremsverzögerung, welcher im normalen Fahrbetrieb eines Fahrzeugs nicht überschritten werden kann, so kann im fünften Verfahrensschritt V hieraus geschlussfolgert werden, dass ein Kollisionsfall eingetreten ist. Hierauf kann die adaptive Bremslichtfunktion beispielsweise erneut aktiviert werden oder deren vorherige, gegebenenfalls noch nicht wieder rückgängig gemachte Aktivierung kann verlängert werden, und es kann eine zusätzliche Lichtfunktion, beispielsweise eine Wiederholblinklichtfunktion, zur Kenntlichmachung einer zusätzlichen Eskalationsstufe der adaptiven Bremslichtfunktion aktiviert werden, beispielsweise zumindest zunächst dauerhaft.

In den genannten Fällen ist das Ergebnis der Durchführung des im fünften Verfahrensschritt V vorgenommenen Vergleichs, dass weiterhin eine Bremsverzögerung vorliegt und/oder dass ein vorgegebener beziehungsweise der vorgegebene Schwellenwert einer kritischen Bremsverzögerung durch die aus dem einer Beschleunigung proportionalen Beschleunigungssignal ermittelte Bremsverzögerung beispielsweise weiterhin überschritten ist. Daraufhin kann das Verfahren enden, oder es kann auf den fünften Verfahrensschritt V wieder der vierte Verfahrensschritt IV folgen, wie dies in Fig. 3 durch einen Pfeil F dargestellt ist.

Der fünfte Verfahrensschritt V und der vierte Verfahrensschritt IV können wie durch eine sich durch den Pfeil E und den Pfeil F in Fig. 3 gebildete Schleife dargestellt so lange wiederholt werden, bis das Ergebnis der Durchführung des im fünften Verfahrensschritt V vorgenommenen Vergleichs lautet, dass zumindest keine Bremsverzögerung mehr vorliegt. Das Verfahren kann dann enden.

Liegt als Ergebnis der Durchführung des im fünften Verfahrensschritt V vorgenommenen Vergleichs vor, dass keine Bremsverzögerung mehr vorliegt, sondern stattdessen die Fahrzeugleuchte 01 eine einer negativen Bremsverzögerung entsprechende Beschleunigung erfährt, kann auf den fünften Verfahrensschritt V wieder der erste Verfahrensschritt I folgen, wie dies in Fig. 3 durch einen Pfeil G dargestellt ist. Im Fall des Fortschritts des Verfahrens entlang des durch den Pfeil G angezeigten Wegs ist die kritische Bremssituation, beispielsweise eine Notbremssituation oder sogar eine Kollision, die mit einem Stillstand des Fahrzeugs verbunden gewesen sein kann, beendet, beispielsweise indem das unbeschädigte Fahrzeug wieder Fahrt aufnimmt, oder das beschädigte Fahrzeug von der Gefahrenstelle entfernt, beispielsweise abgeschleppt wird.

Zusammengefasst sieht die Erfindung vor, mindestens einen Beschleunigungssensor in einer insbesondere als Heckleuchte ausgestalteten Fahrzeugleuchte 01 zu integrieren, mit dem es mit einer durch eine entsprechende Auswerte-Elektronik verwirklichten Steuereinheit 06 möglich ist, momentan auf die Fahrzeugleuchte 01 und damit auch auf ein mit ihr verbundenes eigenes Fahrzeug einwirkende Beschleunigungen zu bestimmen und hieraus abzuleiten, ob ein Notbremsfall oder mindestens ein starker Bremszustand oberhalb eines Schwellenwerts einer kritischen Bremsverzögerung des eigenen Fahrzeugs vorliegt. Sind die Beschleunigungen entsprechend hoch, wird die Bremslichtfunktion und eine oder mehrere, ansonsten einer anderen Signalfunktionen dienende Lichtfunktionen entsprechend der unterschiedlichen Möglichkeiten in einer Fahrzeugleuchte 01, wie beispielsweise einleitend zu den aus dem Stand der Technik bekannten adaptiven Bremslichtfunktionen beschrieben, zur Verwirklichung einer adaptiven Bremslichtfunktion angesteuert. Insbesondere kann dies eine auch als Fahrtrichtungsanzeigelichtfunktion FRA bezeichnete Wiederholblinklichtfunktion mit einbeziehen.

Die Erfindung sieht somit zur Lösung der gestellten Aufgabe einen in eine insbesondere als eine Heckleuchte ausgestaltete Fahrzeugleuchte 01 integrierten Beschleunigungssensor 05 sowie eine mit diesem und wenigstens einem zur Erfüllung einer Lichtfunktion, beispielsweise der Bremslichtfunktion vorgesehenen Leuchtmittel mit mindestens einer Lichtquelle 04 gekoppelte Steuerschaltung 06 vor, welche einer momentanen Beschleunigung entsprechende Ausgangssignale des Beschleunigungssensors 05 auswertet und mit mindestens einem Schwellenwert vergleicht, oberhalb dem eine adaptive Bremslichfunktion ausgelöst wird, sei es durch ein beispielsweise blinkendes Aufleuchten etwa der Bremslichtfunktion und durch eine Einbeziehung der 09 anderer Lichtfunktionen zur Darstellung und/oder Hervorhebung der Bremslichtfunktion.

Wichtig ist hervorzuheben, dass die Erfindung nicht auf eine Verwirklichung in einer als Heckleuchte ausgeführten Fahrzeugleuchte beschränkt ist. Beispielsweise eine Aktivierung einer Wiederholblinklichtfunktion in Zusammenhang mit einer Verwirklichung einer adaptiven Bremslichtfunktion im Kollisionsfall kann auch die Verkehrssicherheit entgegenkommender oder sich seitlich annähernder Fahrzeuge erhöhen, da auch diese durch das Aufleuchten einer Wiederholblinklichtfunktion an der Fahrzeugfront oder -seite bereits frühzeitig auf eine vorliegende Gefahrensituation hingewiesen werden.

Ebenfalls wichtig ist hervorzuheben, dass eine Voraussetzung zur Verwirklichung der Erfindung ein in eine als Heckleuchte ausgestaltete Fahrzeugleuchte 01 integrierter Beschleunigungssensor 05 ist, der Beschleunigungen mindestens in einer in eingebautem Zustand der Fahrzeugleuchte horizontalen Richtung detektieren kann. Ein solcher Beschleunigungssensor wird auch Beschleunigungsmesser, Accelerometer, Akzelerometer, B-Messer oder G-Sensor genannt.

Hieran angebunden ist eine eine Steuereinheit 06 verwirklichende Elektronik, die die Sensordaten ausliest, gegebenenfalls entsprechend filtert und hinsichtlich der hieraus ermittelten Beschleunigungswerte bewertet. Hierdurch kann unabhängig von Steuergeräten außerhalb einer Fahrzeugleuchte, wie etwa einem Fahrzeugsteuergerät bewertet werden, ob ein normaler Bremsfall oder ein intensivierter Bremsfall, oder gegebenenfalls sogar ein Notbremsfall vorliegt. Im Fall einer starken Bremsung entsprechend einer starken, in der voranstehenden Beschreibung als Bremsverzögerung bezeichneten negativen Beschleunigung kann eine adaptive Bremslichtfunktion Signalfunktion, beispielsweise wie beschrieben, mit einer erweiterten und/oder angepassten Ausleuchtung dargestellt werden, beispielsweise heller ausgeleuchtet, mit mehr Leuchtfläche 07 versehen, etc.

Dabei wird zumindest ein erster Schwellwert einer kritischen Bremsverzögerung erreicht oder überschritten.

Auch kann zusätzlich zu einer Bremslichtfunktion eine andere Lichtfunktion, vorzugsweise eine andere Signalfunktion zur Verwirklichung der adaptiven Bremslichtfunktion durch erweiterte Ausleuchtung hinzugefügt werden.

Sind in einem Fahrzeug beide Heckleuchten wie zuvor beschrieben ausgestattet, kommt es bei einer Verwirklichung der adaptiven Bremslichtfunktion unter Aktivierung der Wiederholblinklichtfunktionen an beiden Fahrzeugleuchten 01 zur allgemein als Anzeige einer Notbremssituation für den nachfolgenden Verkehr bekannten Aktivierung der Warnblinklichtfunktion.

Über eine vollständige Lösung der der Erfindung zu Grunde liegenden Aufgabe hinausgehende Vorteile sind, dass durch die Erfindung die diesbezügliche Intelligenz zum Fahrzeugsteuergerät zusätzlich oder ausschließlich in die Leuchte wandert. Dadurch wird die Verkehrssicherheit dahingehend erhöht, dass eine adaptive Bremslichtfunktion auch bei einer Unterbrechung der Verbindung zum Fahrzeugsteuergerät oder einer Fehlfunktion des Fahrzeugsteuergeräts angezeigt und damit verwirklicht werden kann. Ist darüber hinaus ein eigener elektrischer Energiespeicher in der Fahrzeugleuchte verbaut, kann die Anzeige und Verwirklichung einer adaptiven Bremslichtfunktion sogar unabhängig von einer elektrischen Verbindung zum Fahrzeug erfolgen.

Hierdurch ergeben sich auch eine Reihe von Synergieeffekten. So sind in einer Fahrzeugleuchte die nötigen Bauteile einfacher zu integrieren und/oder teilweise auch schon vorhanden. Auch der Zusatzaufwand für Verkabelung fällt weg. Hierdurch werden Kosten und auch Gewicht eingespart, da insbesondere weniger Kabelmasse benötigt wird.

Die Erfindung kann durch oder in Zusammenhang mit einem zur Erfüllung wenigstens einer Lichtfunktion einer Fahrzeugleuchte 01 vorgesehenen oder einer Lichtverteilung einer Lichtfunktion einer Fahrzeugleuchte 01 beitragenden Leuchtmittel verwirklicht sein, welches zusätzlich zu mindestens einer Lichtquelle einen Beschleunigungssensor und eine mit diesem verbundene Steuereinheit aufweist, welche die Lichtquelle im Falle einer Überschreitung eines Schwellenwerts einer kritischen Bremsverzögerung kurzzeitig derart ansteuert, dass diese entweder stärker aufleuchtet und/oder kurzzeitig deaktiviert wird, wenn diese bereits bei der Überschreitung aufgeschaltet ist, oder dass diese wenigstens einmalig, zumindest kurzzeitig, beispielsweise mehrfach schnell blinkend, aufleuchtet, wenn diese bei der Überschreitung abgeschaltet ist.

Die Erfindung ist nicht durch die Beschreibung anhand der Ausführungsbeispiele beschränkt.

Die Erfindung ist insbesondere im Bereich der Herstellung von Fahrzeugleuchten, insbesondere Kraftfahrzeugleuchten gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugleuchte
- 02: Leuchtengehäuse
- 03: Lichtscheibe
- 04: Lichtquelle
- 05: Beschleunigungssensor
- 06: Steuereinheit
- 07: Kammer
- 08: Lichtaustrittsfläche
- 09: Leuchtfläche
- 10: Temperatursensor
- 11: Energiespeicher
- I: Verfahrensschritt
- II: Verfahrensschritt
- III: Verfahrensschritt
- IV: Verfahrensschritt
- V: Verfahrensschritt
- A: Pfeil
- B: Pfeil
- C: Pfeil
- D: Pfeil
- E: Pfeil
- F: Pfeil
- G: Pfeil
- BL: Leuchtfläche einer Bremslichtfunktion
- FRA: Leuchtfläche einer Wiederholblinklichtfunktion zur Fahrtrichtungsanzeige
- NL: Leuchtfläche einer Nebelschlusslichtfunktion
- RFL: Leuchtfläche einer Rückfahrlichtfunktion
- SL: Leuchtfläche einer Schlusslichtfunktion

## Patentansprüche

1. Fahrzeugleuchte (01) mit mindestens einem wenigstens eine Lichtquelle (04) umfassenden Leuchtmittel zur Erfüllung zumindest einer Lichtfunktion (BL, FRA, NL, SL), umfassend mindestens:
- einen ein zumindest einer Bremsverzögerung proportionales Beschleunigungssignal ausgebenden Beschleunigungssensor (05), und
- eine mit dem Beschleunigungssensor (05) und zumindest einem Leuchtmittel der Fahrzeugleuchte (01) verbundene Steuereinheit (06),
wobei die Steuereinheit (06) das Beschleunigungssignal auswertet, die so erhaltene Bremsverzögerung mit wenigstens einem vorgegebenen Schwellenwert einer kritischen Bremsverzögerung vergleicht und abhängig vom Ergebnis dieses Vergleichs zur Verwirklichung einer adaptiven autarken Bremslichtfunktion bei einer Überschreitung des Schwellenwerts mindestens ein mit ihr verbundenes, zur Erfüllung wenigstens einer Lichtfunktion (FRA, NL, SL) der Fahrzeugleuchte (01) vorgesehenes Leuchtmittel mindestens einmalig zumindest kurzzeitig ansteuert, **dadurch gekennzeichnet, dass** die Fahrzeugleuchte mehrere Leuchtflächen (09) aufweist, von denen jede der Erfüllung einer oder mehrerer Lichtfunktionen zugeordnet ist und, dass die adaptive Bremslichtfunktion ein Aufleuchten der Bremslichtfunktion und eine Einbeziehung der Leuchtflächen anderer Lichtfunktionen zur Darstellung und/oder Hervorhebung der Bremslichtfunktion umfasst, wobei es sich bei mindestens einer bei einer Überschreitung des Schwellenwerts mindestens einmalig zumindest kurzzeitig angesteuerten Lichtfunktion um eine von einer Bremslichtfunktion (BL) verschiedene Lichtfunktion handelt.

2. Fahrzeugleuchte nach Anspruch 1, wobei die mindestens einmalige, kurzzeitige Ansteuerung vorsieht, dass mindestens eine Lichtfunktion (BL, FRA, NL, SL) der Fahrzeugleuchte (01) mindestens einmalig zumindest kurzzeitig aktiviert wird, sofern diese noch nicht aktiv ist, und/oder mindestens einmalig zumindest kurzzeitig verstärkt aufleuchtet, sofern diese bereits aktiv ist, und/oder mindestens einmalig kurzzeitig deaktiviert wird, sofern diese bereits aktiv ist.

3. Fahrzeugleuchte nach Anspruch 1 oder 2, wobei eine von einer Bremslichtfunktion (BL) verschiedene Lichtfunktion eine Wiederholblinklichtfunktion (FRA) ist.

4. Fahrzeugleuchte nach einem der voranstehenden Ansprüche, wobei eine von einer Bremslichtfunktion (BL) verschiedene Lichtfunktion eine Schlusslichtfunktion (SL) ist.

5. Fahrzeugleuchte nach einem der voranstehenden Ansprüche, wobei sie einen ein einer Außentemperatur proportionales Temperatursignal ausgebenden und mit der Steuereinheit (06) verbundenen Temperatursensor (10) umfasst, welche Steuereinheit (06) zumindest einen Schwellenwert einer kritischen Bremsverzögerung abhängig vom Temperatursignal verändert, wobei zumindest ein erster Schwellenwert einer kritischen Bremsverzögerung mit sinkender Außentemperatur herabgesetzt wird.

6. Fahrzeugleuchte nach einem der voranstehenden Ansprüche, wobei sie einen elektrischen Energiespeicher (11) zum zumindest zeitweiligen Betrieb der Fahrzeugleuchte (01) und/oder zumindest deren abhängig vom Beschleunigungssignal angesteuerter Lichtfunktion (BL, FRA, NL, SL) umfasst.

7. Verfahren zum Betrieb einer Fahrzeugleuchte (01) die mit mindestens einem Leuchtmittel mit wenigstens einer Lichtquelle (04) zur Erfüllung zumindest einer Lichtfunktion (BL, FRA, NL, SL) der Fahrzeugleuchte (01), einem Beschleunigungssensor (05) und einer mit diesem und dem Leuchtmittel verbundenen Steuereinheit (06) ausgestattet ist, umfassend die Verfahrensschritte:
- leuchteninterne Erfassung einer Bremsverzögerung anhand des ein einer Beschleunigung proportionales Beschleunigungssignal ausgebenden Beschleunigungssensors (05) der Fahrzeugleuchte (01),
- Vergleich der erfassten Bremsverzögerung mit mindestens einem vorgegebenen Schwellenwert einer kritischen Bremsverzögerung vermittels der Steuereinheit (06) der Fahrzeugleuchte (01), welcher Vergleich als Ergebnis hat, ob ein vorgegebener Schwellenwert einer kritischen Bremsverzögerung überschritten ist, oder nicht, und
- mindestens einmalig zumindest kurzzeitige Ansteuerung mindestens einer Lichtfunktion (FRA, NL, SL) der Fahrzeugleuchte (01) zur Verwirklichung einer adaptiven Lichtfunktion vermittels der Steuereinheit (06) bei einer Überschreitung mindestens eines Schwellenwerts als Ergebnis des Vergleichs, **dadurch gekennzeichnet, dass** die Fahrzeugleuchte mehrere Leuchtflächen (09) aufweist, von denen jede der Erfüllung einer oder mehrerer Lichtfunktionen zugeordnet ist und, dass die adaptive Lichtfunktion ein Aufleuchten der Bremslichtfunktion und eine Einbeziehung der Leuchtflächen anderer Lichtfunktionen zur Darstellung und/oder Hervorhebung der Bremslichtfunktion umfasst, wobei es sich bei mindestens einer bei einer Überschreitung des Schwellenwerts mindestens einmalig zumindest kurzzeitig angesteuerten Lichtfunktion um eine von einer Bremslichtfunktion (BL) verschiedene Lichtfunktion handelt.

8. Verfahren nach Anspruch 7, wobei die mindestens einmalig zumindest kurzzeitige Ansteuerung mindestens einer Lichtfunktion (BL, FRA, NL, SL) der Fahrzeugleuchte (01) vermittels der Steuereinheit (06) vorsieht, mindestens eine Lichtfunktion (BL, FRA, NL, SL) der Fahrzeugleuchte (01):
- mindestens einmalig zumindest kurzzeitig zu aktivieren, sofern diese Lichtfunktion (BL, FRA, NL, SL) noch nicht aktiv ist, und/oder
- mindestens einmalig kurzzeitig zu deaktivieren, sofern diese Lichtfunktion (BL, FRA, NL, SL) bereits aktiv ist, und/oder
- mindestens einmalig zumindest kurzzeitig verstärkt aufleuchten zu lassen, sofern diese Lichtfunktion (BL, FRA, NL, SL) bereits aktiv ist.

## Claims

1. A vehicle lamp (01) with at least one illuminant comprising at least one light source (04) for the fulfilling of at least one light function (BL, FRA, NL, SL), the vehicle lamp (01) comprising at least:
- one acceleration sensor (05) outputting an acceleration signal that is proportional to at least a brake delay, and
- a control unit (06) connected to the acceleration sensor (05) and to at least one illuminant of the vehicle lamp (01),
wherein the control unit (06) evaluates the acceleration signal, compares the thus obtained brake delay with at least one specified threshold value of a critical brake delay, and, depending on the result of this comparison, activates at least one illuminant at least one time at least briefly, which illuminant is connected to the control unit (06) and provided for the fulfilling of at least one light function (FRA, NL, SL) of the vehicle lamp (01), in order to realize an adaptive autonomous brake light function upon an exceeding of a threshold value, **characterised in that** the vehicle lamp has a plurality of luminous surfaces (09), each of which is assigned to the fulfilling of one or more light functions, and **in that** the adaptive brake light function comprises a lighting up of the brake light function and an inclusion of the luminous surfaces of other light functions in order to display and/or emphasize the brake light function, wherein at least one light function activated at least one time at least briefly upon an exceeding of the threshold value is a light function other than the brake light function (BL).

2. The vehicle lamp according to claim 1, wherein the at least one-time brief activation provides that at least one light function (BL, FRA, NL, SL) of the vehicle lamp (01) is activated at least one time at least briefly if it is not yet active, and/or that it lights up stronger at least one time at least briefly if it is already active, and/or that it is deactivated at least one time briefly if it is already active.

3. The vehicle lamp according to claim 1 or 2, wherein one light function other than a brake light function (BL) is a repeater blinker light function (FRA).

4. The vehicle lamp according to one of the previous claims, wherein one light function other than a brake light function (BL) is a tail light function (SL).

5. The vehicle lamp according to one of the previous claims, wherein the vehicle lamp (01) comprises a temperature sensor (10), which outputs a temperature signal that is proportional to an outside temperature and which is connected to the control unit (06), which control unit (06) changes at least one threshold value of a critical brake delay depending on the temperature signal, wherein at least a first threshold value of a critical brake delay is lowered with the outside temperature decreasing.

6. The vehicle lamp according to one of the previous claims, wherein the vehicle lamp (01) comprises an electrical energy storage device (11) for the at least temporary operation of the vehicle lamp (01) and/or for at least the light function (BL, FRA, NL, SL) thereof that is activated depending on the acceleration signal.

7. A method for the operation of a vehicle lamp (01), which vehicle lamp (01) is equipped with at least one illuminant with at least one light source (04) for the fulfilling of at least one light function (BL, FRA, NL, SL) of the vehicle lamp (01), at least one acceleration sensor (05), and a control unit (06) connected to the acceleration sensor (05) and to the illuminant, the method comprising the method steps:
- lamp-internal capture of a brake delay on the basis of an acceleration sensor (05) of the vehicle lamp (01), the acceleration sensor (05) outputting an acceleration signal that is proportional to an acceleration,
- comparison of the captured brake delay with at least one specified threshold value of a critical brake delay by the control unit (06) of the vehicle lamp (01), the result of which comparison is whether a specified threshold value of a critical brake delay has been exceeded or not, and
- an activation at least one time at least briefly of at least one light function (FRA, NL, SL) of the vehicle lamp (01) in order to realize an adaptive light function by the control unit (06) upon an exceeding of at least one threshold value as result of the comparison,
**characterised in that** the vehicle lamp has a plurality of luminous surfaces (09), each of which is assigned to the fulfilling of one or more light functions, and **in that** the adaptive light function comprises a lighting up of the brake light function and an inclusion of the luminous surfaces of other light functions in order to display and/or emphasize the brake light function, wherein at least one light function activated at least one time at least briefly upon an exceeding of the threshold value is a light function other than the brake light function (BL).

8. The method according to claim 7, wherein the at least one-time at least brief activation of at least one light function (BL, FRA, NL, SL) of the vehicle lamp (01) by the control unit (06) provides that at least one light function (BL, FRA, NL, SL) of the vehicle lamp (01):
- is activated at least one time at least briefly if this light function (BL, FRA, NL, SL) is not yet active, and/or
- is deactivated at least one time briefly if this light function (BL, FRA, NL, SL) is already active, and/or
- is caused to light up stronger at least one time at least briefly if this light function (BL, FRA, NL, SL) is already active.

## Revendications

1. Phare de véhicule (01) doté d'au moins un moyen d'éclairage comprenant au moins une source lumineuse (04), destiné à remplir au moins une fonction lumineuse (BL, FRA, NL, SL), comprenant au moins :
- un accéléromètre (05) émettant un signal d'accélération proportionnel à au moins une décélération de freinage, et
- une unité de commande (06) reliée audit accéléromètre (05) et au moins à un moyen d'éclairage dudit phare de véhicule (01),
ladite unité de commande (06) analysant le signal d'accélération, comparant la décélération de freinage ainsi obtenue à au moins un seuil prédéterminé d'une décélération de freinage critique et, en fonction du résultat de cette comparaison, afin de réaliser une fonction de feu de freinage autosuffisante et adaptative en cas de dépassement dudit seuil, commandant au moins une fois au moins pendant une courte durée, au moins un moyen d'éclairage relié à elle-même et prévu pour remplir au moins une fonction lumineuse (FRA, NL, SL) dudit phare de véhicule (01), **caractérisé en ce que** ledit phare de véhicule présente plusieurs surfaces d'éclairage (09) dont chacune est associée à l'exécution d'une ou de plusieurs fonctions lumineuses, et que la fonction de feu de freinage adaptative comprend un allumage de la fonction de feu de freinage et une intégration des surfaces d'éclairage d'autres fonctions lumineuses pour représenter et/ou souligner ladite fonction de feu de freinage, s'agissant, dans le cas d'au moins une fonction lumineuse commandée au moins une seule fois et au moins de courte durée en cas de dépassement du seuil, d'une fonction lumineuse différente d'une fonction de feu de freinage (BL).

2. Phare de véhicule selon la revendication 1, ladite au moins une commande unique et de courte durée prévoyant qu'au moins une fonction lumineuse (BL, FRA, NL, SL) du phare de véhicule (01) est activée au moins une seule fois au moins pour une courte durée, pour autant qu'elle n'a pas encore été activée, et/ou s'allume, au moins une seule fois au moins pour une courte durée, plus intensément, pour autant qu'elle a déjà été activée, et/ou est désactivée au moins une seule fois pour une courte durée, pour autant qu'elle est déjà active.

3. Phare de véhicule selon la revendication 1 ou 2, une fonction lumineuse différente d'une fonction de feu de freinage (BL) étant une fonction de feu clignotant à répétition (FRA).

4. Phare de véhicule selon l'une quelconque des revendications précédentes, une fonction lumineuse différente d'une fonction de feu de freinage (BL) étant une fonction de feu arrière (SL).

5. Phare de véhicule selon l'une quelconque des revendications précédentes, comprenant un capteur de température (10) émettant un signal de température proportionnel à une température extérieure et connecté à l'unité de commande (06), ladite unité de commande (06) modifiant au moins un seuil d'une décélération de freinage critique en fonction du signal de température, au moins un premier seuil d'une décélération de freinage critique étant réduit lorsque la température extérieure baisse.

6. Phare de véhicule selon l'une quelconque des revendications précédentes, comprenant un accumulateur d'énergie électrique (11) destiné à faire fonctionner au moins temporairement ledit phare de véhicule (01) et/ou comprenant au moins sa fonction lumineuse (BL, FRA, NL, SL) commandée en fonction du signal d'accélération.

7. Procédé d'exploitation d'un phare de véhicule (01) qui est équipé d'au moins un moyen d'éclairage doté d'au moins une source lumineuse (04), destiné à remplir au moins une fonction lumineuse (BL, FRA, NL, SL) dudit phare de véhicule (01), d'un accéléromètre (05) et d'une unité de commande (06) connectée à celui-ci et au moyen d'éclairage, comprenant les étapes de procédé suivantes :
- détection, dans le phare, d'une décélération de freinage au moyen de l'accéléromètre (05) du phare de véhicule (01) émettant un signal d'accélération proportionnel à une accélération,
- comparaison de la décélération de freinage détectée, avec au moins un seuil prédéterminé d'une décélération de freinage critique au moyen de l'unité de commande (06) du phare de véhicule (01), laquelle comparaison indique en résultat si un seuil prédéterminé a dépassé ou non une décélération de freinage critique, et
- commande au moins une seule fois pour une courte durée d'au moins une fonction lumineuse (FRA, NL, SL) du phare de véhicule (01) pour réaliser une fonction lumineuse adaptative au moyen de l'unité de commande (06) en cas de dépassement d'au moins un seuil en tant que résultat de la comparaison, **caractérisé en ce que** le phare de véhicule présente plusieurs surfaces d'éclairage (09), dont chacune est associée à l'exécution d'une ou de plusieurs fonctions lumineuses, et que la fonction lumineuse adaptative comprend un allumage de la fonction de feu de frein et une intégration des surfaces d'éclairage d'autres fonctions lumineuses pour représenter et/ou souligner la fonction de feu de frein, s'agissant, pour au moins une fonction lumineuse, d'une fonction lumineuse commandée au moins une seule fois pour au moins une courte durée en cas de dépassement du seuil, d'une fonction lumineuse différente d'une fonction de feu de frein (BL).

8. Procédé selon la revendication 7, ladite commande au moins une fois pour une courte durée, d'au moins une fonction lumineuse (BL, FRA, NL, SL) du phare de véhicule (01) au moyen de l'unité de commande (06) prévoit qu'au moins une fonction lumineuse (BL, FRA, NL, SL) du phare de véhicule (01) :
- sera activée au moins une seule fois pour une courte durée, pour autant que cette fonction lumineuse (BL, FRA, NL, SL) n'est pas encore active, et/ou
- sera désactivée au moins une seule fois pour une courte durée, pour autant que cette fonction lumineuse (BL, FRA, NL, SL) est déjà active, et/ou
- sera allumée plus intensément au moins une seule fois pour une courte durée, pour autant que cette fonction lumineuse (BL, FRA, NL, SL) est déjà active.
